# EUROPEAN PATENT APPLICATION

(11) **EP 4 465 679 A1**
(43) Date of publication of application: **20.11.2024**
(21) Application number: 22926915.4
(22) Date of filing: 30.12.2022
(51) Int. Cl.: H04W 24/02

(54) **COMMUNICATION METHOD AND APPARATUS**

(30) Priority: 21.02.2022 CN 202210158599
(71) Applicant: Huawei Technologies Co., Ltd., Shenzhen, Guangdong 518129 (CN)
(72) Inventor: YANG, Fan, Shenzhen, Guangdong 518129 (CN); HUANG, Zexu, Shenzhen, Guangdong 518129 (CN); HE, Long, Shenzhen, Guangdong 518129 (CN); CHEN, Yang, Shenzhen, Guangdong 518129 (CN); LI, Bangli, Shenzhen, Guangdong 518129 (CN)
(74) Representative: MERH-IP Matias Erny Reichl Hoffmann Patentanwälte PartG mbB
(86) International application number: PCT/CN2022/144283
(87) International publication number: WO 2023/155618

(57) **Abstract**

This application relates to a communication method and an apparatus. A mobility management network element receives first request information from a terminal device, where the first request information is used to request a first service, or is attach request information or registration request information of the terminal device. When the first request information belongs to a first type of information, and an original receiving network element of the first type of information is a faulty mobility management network element, the mobility management network element processes the first request information according to a flow control policy for the first type of information. The mobility management network element may perform flow control on the first type of information. The first type of information includes, for example, information that originally needs to be processed by the faulty mobility management network element. This manner can alleviate impact on users, so that services of the users can be guaranteed.

## Description

### CROSS-REFERENCE TO RELATED APPLICATIONS

This application claims priority to Chinese Patent Application No. 202210158599.6, filed with the China National Intellectual Property Administration on February 21, 2022 and entitled "COMMUNICATION METHOD AND APPARATUS", which is incorporated herein by reference in its entirety.

### TECHNICAL FIELD

This application relates to the field of communication technologies, and in particular, to a communication method and an apparatus.

### BACKGROUND

A 4th generation (4th generation, 4G) mobile communication system is used as an example. To ensure that a service is not interrupted when a site is faulty, mobility management entities (mobility management entities, MMEs) of different sites are deployed in a form of an MME pool (pool) when an evolved packet core (evolved packet core, EPC) of the 4G system is constructed. When an MME of a site is faulty, user signaling (for example, a service request (service request)) of the faulty MME is accessed by an evolved NodeB (eNodeB) to a normal MME in the pool, and therefore a large amount of signaling pours into the normal MME. In this case, the MME needs to process both normal signaling and signaling that originally needs to be processed by the faulty MME. As a result, the MME may start a signaling flow control mechanism to discard signaling beyond a processing capability of the MME, to ensure that a device can run securely and stably. However, this method may affect services of users who originally access the MME.

### SUMMARY

Embodiments of this application provide a communication method and an apparatus, to use differentiated control manners for different signaling, to alleviate impact on services of users.

According to a first aspect, a communication method is provided. The method may be performed by a mobility management network element, may be performed by another device including a function of the mobility management network element, or may be performed by a chip system or another functional module. The chip system or the functional module can implement the function of the mobility management network element. The chip system or the functional module is, for example, disposed in the mobility management network element. Optionally, the mobility management network element is, for example, an MME or an AMF. The method includes: receiving first request information from a terminal device, where the first request information is used to request a first service, or is attach request information or registration request information of the terminal device; and when the first request information belongs to a first type of information, and an original receiving network element of the first type of information is a faulty mobility management network element, processing the first request information according to a flow control policy for the first type of information.

In this embodiment of this application, the mobility management network element may perform flow control on the first type of information. Therefore, after receiving the first request information, the mobility management network element may determine whether the first request information belongs to the first type of information. If the first request information belongs to the first type of information, the mobility management network element may process the first request information according to the flow control policy corresponding to the first type of information. The first type of information includes, for example, information that originally needs to be processed by the faulty mobility management network element. In this manner, impact on users who originally access the mobility management network element may be reduced, so that services of these users can be guaranteed.

In an optional implementation, it is determined that the first request information belongs to the first type of information if an original receiving network element indicated by first information included in the first request information is different from the mobility management network element. An original receiving network element of the first request information is a mobility management network element that should originally process the first request information. The mobility management network element also locally configures the first information, and the first information locally configured by the mobility management network element indicates the mobility management network element. In this case, if a mobility management network element indicated by the first information included in the first request information is different from the mobility management network element, it indicates that the mobility management network element that should originally process the first request information is not the mobility management network element, and therefore, it indicates that the first request information belongs to the first type of information; or if a mobility management network element indicated by the first information included in the first request information and the mobility management network element are a same network element, it indicates that the mobility management network element that should originally process the first request information is the mobility management network element, and therefore, it indicates that the first request information does not belong to the first type of information. In this manner, simple and clear differentiation of disaster recovery information can be implemented.

In an optional implementation, if the first request information is used to request the first service, the first information includes MMEC, or AMF set identifier ID information and an AMF pointer.

When types of the first request information are different, the first information may also be different. The foregoing is merely an example. This is not specifically limited.

In an optional implementation, if the first request information is used to request the first service, the processing the first request information according to a flow control policy for the first type of information includes: sending first reject information to the terminal device if an amount of information belonging to the first type of information is less than a first threshold, to reject a service requested by using the first request information; or ignoring the first request information if an amount of information belonging to the first type of information is greater than or equal to a first threshold.

In an optional implementation, if the first request information is the attach request information or the registration request information of the terminal device, the first information includes a GUMMEI or a GUAMI.

In an optional implementation, if the first request information is the attach request information or the registration request information of the terminal device, the processing the first request information according to a flow control policy for the first type of information includes: sending first response information to the terminal device if an amount of information belonging to the first type of information is less than a second threshold, where the first response information is first accept information, and the first accept information indicates that the attach request information is accepted or that the registration request information is accepted, or the first response information indicates that processing of the first request information is rejected; or ignoring the first request information if an amount of information belonging to the first type of information is greater than or equal to a second threshold.

For a first type of information used to request a service, flow control may be performed by using the first threshold, and for a first type of information used by UE to request to attach to or register with a core network, flow control may be performed by using the second threshold. In this manner, differentiated flow control measures may be taken for different types of signaling, so that a flow control process better complies with a feature of corresponding signaling, to achieve a better flow control effect.

In an optional implementation, the method further includes: the sending first response information to the terminal device if an amount of information belonging to the first type of information is less than a second threshold includes: sending the first response information to the terminal device if the amount of information belonging to the first type of information is less than the second threshold and a first event is met, where the first response information indicates that processing of the first request information is rejected. If the amount of information belonging to the first type of information is less than the second threshold, the mobility management network element may further continue to determine whether the first event is met. If the first event is met, the mobility management network element may indicate the terminal device to reject to process the first request information. The first event is, for example, used to determine a status of a user management network element, or used to determine a processing capability of the user management network element. Whether the user management network element is capable of processing information related to the first request information can be determined using the first event, thereby reducing pressure of the user management network element.

In an optional implementation, the first event includes: No response is received after second request information is sent to a user management network element, where the second request information is used to request to obtain subscription data of the terminal device or update location information of the terminal device. If the mobility management network element receives no response after sending the second request information to the user management network element, it may indicate that the user management network element is incapable of processing the second request information, for example, the user management network element may be congested. Therefore, the mobility management network element may return rejection to the terminal device.

In an optional implementation, the first event includes: After a plurality of pieces of third request information are sent to a user management network element, a proportion of third request information for which no response is received to the plurality of pieces of third request information is greater than or equal to a third threshold, where the third request information is used to request to obtain subscription data of the terminal device or update location information of the terminal device. The mobility management network element may receive, from a plurality of UEs, a plurality of pieces of information that are used to request attachment or registration. In this case, the mobility management network element may also send the plurality of pieces of third request information to the user management network element. If there is excessive third request information for which no response is received, it may indicate that the user management network element is incapable of processing more information. Therefore, the mobility management network element may return rejection to the terminal device, to reduce an amount of information that needs to be processed by the user management network element.

In an optional implementation, the first event includes: A plurality of pieces of fourth request information are sent to a user management network element, and a proportion of fourth request information whose response is a reject response to the plurality of pieces of fourth request information is greater than or equal to a fourth threshold, where the fourth request information is used to request to obtain subscription data of the terminal device or update location information of the terminal device. The mobility management network element may receive, from a plurality of UEs, a plurality of pieces of information that are used to request attachment or registration. In this case, the mobility management network element may also send the plurality of pieces of fourth request information to the user management network element. If there is excessive fourth request information that is rejected, it may indicate that the user management network element is incapable of processing more information. Therefore, the mobility management network element may return rejection to the terminal device, to reduce an amount of information that needs to be processed by the user management network element.

In an optional implementation, the first event includes: An amount of information that is sent to a user management network element and that is used to obtain subscription data is greater than or equal to a fifth threshold. The mobility management network element may receive, from a plurality of UEs, the plurality of pieces of information that are used to request attachment or registration. In this case, the mobility management network element may also send, to the user management network element, a plurality of pieces of information used to obtain the subscription data. If the mobility management network element sends, to the user management network element, excessive information used to obtain the subscription data, the user management network element may have great processing pressure. Therefore, the mobility management network element may return rejection to the terminal device, to reduce an amount of information that needs to be processed by the user management network element.

In an optional implementation, if the first response information indicates that processing of the first request information is rejected, the first response information includes a first reject cause value, where the first reject cause value indicates the terminal device to continue to attempt to connect. Because the first reject cause value is used, a probability that the terminal device falls back to a lower-standard network due to flow control, network congestion, or the like can be reduced, and the terminal device camps on a current network as much as possible, thereby reducing service restoration time. Optionally, the first reject cause value is, for example, #22, or may be another value.

In an optional implementation, the method further includes: obtaining the subscription data of the terminal device from the user management network element if the amount of information belonging to the first type of information is less than the second threshold; and the sending first response information to the terminal device includes: sending the first response information to the terminal device after the subscription data of the terminal device is obtained, where the first response information is the first accept information, and the first accept information indicates that the attach request information is accepted or that the registration request information is accepted. The second threshold is related to performance of the user management network element. The second threshold may be set based on a capability (or performance) of the user management network element, in other words, the second threshold is related to the performance of the user management network element. It can be ensured, by setting the second threshold, as much as possible that the first type of information (for example, information used to request to attach to or register with a core network) that passes through the flow control by the mobility management network element can be successfully processed by the user management network element at a back end, thereby reducing a probability that the user management network element is congested, improving network processing efficiency, and restoring a service of the terminal device as soon as possible.

In an optional implementation, the user management network element is an HSS or a UDM. For example, for a 4G system, the user management network element may be the HSS, and for a 5G system, the user management network element may be the UDM. If the method in this embodiment of this application is applied to another communication system, the user management network element may have another implementation.

In an optional implementation, the first threshold is related to the second threshold, in other words, the first threshold is set based on the second threshold. As described above, for the first type of information used to request a service, the flow control may be performed using the first threshold, and for the first type of information used by the UE to request attachment or registration, the flow control may be performed using the second threshold. Typically, if the mobility management network element does not ignore the first type of information used to request a service, the terminal device further sends the information used to request to attach to or register with the core network, in other words, information used to request a service is associated with the information used to request to attach to or register with the core network. Therefore, the first threshold may be related to the second threshold. In this way, it can be ensured as much as possible that, after the information used to request a service is not ignored by the mobility management network element, converted information used to request to attach to or register with the core network may not be ignored by the mobility management network element as much as possible, thereby reducing waste of network resources.

In an optional implementation, the first type of information corresponds to a first type of service session, and the first type is a data type or a voice type. If information used by the terminal device to request to establish the first type of session is rejected, the terminal device may not fall back to the lower-standard network, but continues to repeatedly attempt in the current network; or if information used by the terminal device to request to establish another type of session is rejected, the terminal device may fall back to the lower-standard network. Therefore, the first type of information corresponds to the first type of service session. To be specific, the mobility management network element may perform flow control on information used to request the first type of service session. Even if these pieces of information are ignored due to the flow control, the terminal device does not fall back to the lower-standard network, and the service restoration time of the terminal device is not greatly affected. In addition, a probability that the terminal device falls back to the lower-standard network can be reduced, and service restoration efficiency of the terminal device can be improved.

In an optional implementation, the processing the first request information according to a flow control policy for the first type of information includes: sending the first response information to the terminal device if the amount of information belonging to the first type of information is less than a sixth threshold, to indicate that a session is successfully established or unsuccessfully established; or ignoring the first request information if the amount of information belonging to the first type of information is greater than or equal to a sixth threshold. The mobility management network element may perform flow control on the first type of information by using the sixth threshold. In this way, an amount of information processed by the mobility management network element can be effectively controlled. Alternatively, the mobility management network element may perform flow control on the first type of information in another manner. This is not specifically limited.

According to a second aspect, a communication method is provided. The method may be performed by a session management network element, may be performed by another device including a function of the session management network element, or may be performed by a chip system or another functional module. The chip system or the functional module can implement the function of the session management network element. The chip system or the functional module is, for example, disposed in the session management network element. Optionally, the session management network element is, for example, an SGW or an SMF. The method includes: receiving first request information from a terminal device, where the first request information is used to request to establish a session; and performing flow control on the first request information if the session that the first request information is used to request to establish is a first type of session.

In an optional implementation, the first type is a data type or a voice type.

For technical effects of the second aspect or the optional implementations of the second aspect, refer to the descriptions of the technical effects of the first aspect or the corresponding implementations.

According to a third aspect, a communication method is provided. The method may be performed by a mobility management network element, may be performed by another device including a function of the mobility management network element, or may be performed by a chip system or another functional module. The chip system or the functional module can implement the function of the mobility management network element. The chip system or the functional module is, for example, disposed in the mobility management network element. Optionally, the mobility management network element is, for example, an MME or an AMF. The method includes: receiving first request information from a terminal device, where the first request information is attach request information or registration request information of the terminal device; and sending second reject information to the terminal device if a first event is met, where the second reject information includes a first reject cause value, and the first reject cause value indicates the terminal device to continue to attempt to connect to a current network.

After the mobility management network element receives the first request information, because processing of the first request information requires assistance of a user management network element, the mobility management network element may consider a bearing capability of the user management network element. For example, the mobility management network element may determine, by using the first event, whether the user management network element can process the first request information. If the user management network element is currently incapable of processing the first request information, the mobility management network element may reject to process the first request information, to protect the user management network element. There may be a plurality of types of first events, which are flexible.

In an optional implementation, the first event includes: No response is received after second request information is sent to the user management network element, where the second request information is used to request to obtain subscription data of the terminal device or update location information of the terminal device. If the mobility management network element receives no response after sending the second request information to the user management network element, it may indicate that the user management network element is incapable of processing the second request information, for example, the user management network element may be congested. Therefore, the mobility management network element may return rejection to the terminal device.

In an optional implementation, the first event includes: After a plurality of pieces of third request information are sent to the user management network element, a proportion of third request information for which no response is received to the plurality of pieces of third request information is greater than or equal to a third threshold, where the third request information is used to request to obtain subscription data of the terminal device or update location information of the terminal device. The mobility management network element may receive, from a plurality of UEs, a plurality of pieces of information that are used to request attachment or registration. In this case, the mobility management network element may also send the plurality of pieces of third request information to the user management network element. If there is excessive third request information for which no response is received, it may indicate that the user management network element is incapable of processing more information. Therefore, the mobility management network element may return rejection to the terminal device, to reduce an amount of information that needs to be processed by the user management network element.

In an optional implementation, the first event includes: A plurality of pieces of fourth request information are sent to the user management network element, and a proportion of fourth request information whose response is a reject response to the plurality of pieces of fourth request information is greater than or equal to a fourth threshold, where the fourth request information is used to request to obtain subscription data of the terminal device or update location information of the terminal device. The mobility management network element may receive, from a plurality of UEs, a plurality of pieces of information that are used to request attachment or registration. In this case, the mobility management network element may also send the plurality of pieces of fourth request information to the user management network element. If there is excessive fourth request information that is rejected, it may indicate that the user management network element is incapable of processing more information. Therefore, the mobility management network element may return rejection to the terminal device, to reduce an amount of information that needs to be processed by the user management network element.

In an optional implementation, the first event includes: An amount of information that is sent to the user management network element and that is used to obtain subscription data is greater than or equal to a fifth threshold. The mobility management network element may receive, from a plurality of UEs, a plurality of pieces of information that are used to request attachment or registration. In this case, the mobility management network element may also send, to the user management network element, a plurality of pieces of information used to obtain the subscription data. If the mobility management network element sends, to the user management network element, excessive information used to obtain the subscription data, the user management network element may have great processing pressure. Therefore, the mobility management network element may return rejection to the terminal device, to reduce an amount of information that needs to be processed by the user management network element.

In an optional implementation, the method further includes: determining that the first request information belongs to a first type of information, where an original receiving network element of the first type of information is a faulty mobility management network element, and the first type of information is a flow control object. For example, if the mobility management network element determines that the first request information belongs to the first type of information, the mobility management network element may determine whether the first event is met. However, if the first request information does not belong to the first type of information, the mobility management network element may not need to determine whether the first event is met, but may directly process the first request information. In this manner, it can be ensured as much as possible that information about users who originally access the mobility management network element can be processed, thereby improving service continuity of these users.

In an optional implementation, the sending second reject information to the terminal device if a first event is met includes: sending the second reject information to the terminal device if an amount of received attach request information or registration information that is of a UE and that belongs to the first type of information is smaller than a second threshold and the first event is met.

In an optional implementation, the second threshold is related to performance of the user management network element, and the user management network element is configured to store the subscription data of the terminal device.

For technical effects brought by the third aspect or the optional implementations of the third aspect, refer to the descriptions of the technical effects of the first aspect or the corresponding implementations.

According to a fourth aspect, a fourth communication method is provided. The method may be performed by a mobility management network element, may be performed by another device including a function of the mobility management network element, or may be performed by a chip system or another functional module. The chip system or the functional module can implement the function of the mobility management network element. The chip system or the functional module is, for example, disposed in the mobility management network element. Optionally, the mobility management network element is, for example, an MME or an AMF. The method includes: receiving first request information from a terminal device, where the first request information is used to request a first service; sending first reject information to the terminal device if an amount of received information used to request a service is less than a first threshold, to reject the service requested by using the first request information; receiving second request information from the terminal device, where the second request information is attach request information or registration request information of the terminal device; and determining, based on a second threshold, whether to ignore the second request information.

In an optional implementation, the method further includes: ignoring the first request information if the amount of received information used to request a service is greater than or equal to the first threshold.

In an optional implementation, the method further includes: determining that the first request information belongs to a first type of information, where an original receiving network element of the first type of information is a faulty mobility management network element, and the first type of information is a flow control object.

In an optional implementation, the determining that the first request information belongs to a first type of information includes: determining that the first request information belongs to the first type of information if an original receiving network element indicated by first information included in the first request information is different from the mobility management network element.

In an optional implementation, the first information includes MMEC, or the first information includes an AMF set ID and an AMF pointer.

In an optional implementation, the method further includes: determining that the second request information belongs to the first type of information.

In an optional implementation, the determining that the second request information belongs to the first type of information includes: determining that the second request information belongs to the first type of information if an original receiving network element indicated by first information included in the second request information is different from the mobility management network element.

In an optional implementation, the second information includes a GUMMEI or MMEC; or the second information includes a GUAMI, or AMF set ID information and an AMF pointer.

In an optional implementation, the second threshold is related to performance of a user management network element, and the user management network element is configured to store subscription data of the terminal device.

In an optional implementation, the first threshold is related to the second threshold.

In an optional implementation, the determining, based on a second threshold, whether to ignore the second request information includes: skipping ignoring the second request information if an amount of received information about attach request information or registration information of UE is less than the second threshold; or ignoring the second request information if an amount of received information about attach request information or registration information of UE is greater than or equal to the second threshold.

In an optional implementation, the method further includes: sending first response information to the terminal device if the second request information is not ignored, where the first response information is first accept information, and the first accept information indicates that the attach request information is accepted or that the registration request information is accepted; or sending second reject information to the terminal device if the second request information is not ignored and a first event is met.

In an optional implementation, the second reject information includes a first reject cause value, and the first reject cause value indicates the terminal device to continue to attempt to connect to a current network.

In an optional implementation, the first event includes: No response is received after the second request information is sent to the user management network element, where the second request information is used to request to obtain the subscription data of the terminal device or update location information of the terminal device. If the mobility management network element receives no response after sending the second request information to the user management network element, it may indicate that the user management network element is incapable of processing the second request information, for example, the user management network element may be congested. Therefore, the mobility management network element may return rejection to the terminal device.

In an optional implementation, the first event includes: After a plurality of pieces of third request information are sent to the user management network element, a proportion of third request information for which no response is received to the plurality of pieces of third request information is greater than or equal to a third threshold, where the third request information is used to request to obtain the subscription data of the terminal device or update location information of the terminal device. The mobility management network element may receive, from a plurality of UEs, a plurality of pieces of information that are used to request attachment or registration. In this case, the mobility management network element may also send the plurality of pieces of third request information to the user management network element. If there is excessive third request information for which no response is received, it may indicate that the user management network element is incapable of processing more information. Therefore, the mobility management network element may return rejection to the terminal device, to reduce an amount of information that needs to be processed by the user management network element.

In an optional implementation, the first event includes: A plurality of pieces of fourth request information are sent to the user management network element, and a proportion of fourth request information whose response is a reject response to the plurality of pieces of fourth request information is greater than or equal to a fourth threshold, where the fourth request information is used to request to obtain the subscription data of the terminal device or update location information of the terminal device. The mobility management network element may receive, from a plurality of UEs, a plurality of pieces of information that are used to request attachment or registration. In this case, the mobility management network element may also send the plurality of pieces of fourth request information to the user management network element. If there is excessive fourth request information that is rejected, it may indicate that the user management network element is incapable of processing more information. Therefore, the mobility management network element may return rejection to the terminal device, to reduce an amount of information that needs to be processed by the user management network element.

In an optional implementation, the first event includes: An amount of information that is sent to the user management network element and that is used to obtain the subscription data is greater than or equal to a fifth threshold. The mobility management network element may receive, from a plurality of UEs, a plurality of pieces of information that are used to request attachment or registration. In this case, the mobility management network element may also send, to the user management network element, a plurality of pieces of information used to obtain the subscription data. If the mobility management network element sends, to the user management network element, excessive information used to obtain the subscription data, the user management network element may have great processing pressure. Therefore, the mobility management network element may return rejection to the terminal device, to reduce an amount of information that needs to be processed by the user management network element.

For technical effects brought by the fourth aspect or the optional implementations of the fourth aspect, refer to the descriptions of the technical effects of the first aspect or the corresponding implementations.

According to a fifth aspect, a communication apparatus is provided. The communication apparatus may be the mobility management network element according to any one of the first aspect to the fourth aspect. The communication apparatus has a function of the foregoing mobility management network element. The communication apparatus is, for example, a mobility management network element, or a functional module, for example, a baseband apparatus or a chip system, in the mobility management network element. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). The transceiver unit can implement a sending function and a receiving function. When the transceiver unit implements the sending function, the transceiver unit may be referred to as a sending unit (also referred to as a sending module sometimes). When the transceiver unit implements the receiving function, the transceiver unit may be referred to as a receiving unit (also referred to as a receiving module sometimes). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a general name for these functional modules.

In an optional implementation, the transceiver unit is configured to receive first request information from a terminal device, where the first request information is used to request a first service, or is attach request information or registration request information of the terminal device. The processing unit is configured to process the first request information according to a flow control policy for a first type of information when the first request information belongs to the first type of information, where an original receiving network element of the first type of information is a faulty mobility management network element.

In an optional implementation, the transceiver unit is configured to receive the first request information from the terminal device, where the first request information is the attach request information or the registration request information of the terminal device. The transceiver unit is further configured to send second reject information to the terminal device if a first event is met, where the second reject information includes a first reject cause value, and the first reject cause value indicates the terminal device to continue to attempt to connect to a current network (or the processing unit is configured to send second reject information to the terminal device through the transceiver unit if a first event is met, where the second reject information includes a first reject cause value, and the first reject cause value indicates the terminal device to continue to attempt to connect to a current network).

In an optional implementation, the transceiver unit is configured to receive the first request information from the terminal device, where the first request information is used to request the first service. The transceiver unit is further configured to send first reject information to the terminal device if an amount of received information used to request a service is less than a first threshold, to reject the service requested by using the first request information (or the processing unit is configured to send first reject information to the terminal device through the transceiver unit if an amount of received information used to request a service is less than a first threshold, to reject the service requested by using the first request information). The transceiver unit is further configured to receive second request information from the terminal device, where the second request information is the attach request information or the registration request information of the terminal device. The processing unit is configured to determine, based on a second threshold, whether to ignore the second request information.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform a function of the mobility management network element according to any one of the first aspect to the fourth aspect.

According to a sixth aspect, a communication apparatus is provided. The communication apparatus may be the session management network element according to any one of the first aspect to the fourth aspect. The communication apparatus has a function of the foregoing session management network element. The communication apparatus is, for example, a session management network element, or a functional module, for example, a baseband apparatus or a chip system, in the session management network element. In an optional implementation, the communication apparatus includes the baseband apparatus and a radio frequency apparatus. In another optional implementation, the communication apparatus includes a processing unit (also referred to as a processing module sometimes) and a transceiver unit (also referred to as a transceiver module sometimes). For an implementation of the transceiver unit, refer to the descriptions of the fifth aspect.

In an optional implementation, the transceiver unit is configured to receive first request information from a terminal device, where the first request information is used to request to establish a session; and the processing unit is configured to perform flow control on the first request information if the session that the first request information is used to request to establish is a first type of session.

In an optional implementation, the communication apparatus further includes a storage unit (also referred to as a storage module sometimes). The processing unit is configured to: be coupled to the storage unit, and execute a program or instructions in the storage unit, to enable the communication apparatus to perform a function of the access network device according to the first aspect and/or the second aspect.

According to a seventh aspect, a communication system is provided, and includes the communication apparatus according to the fifth aspect and the communication apparatus according to the sixth aspect.

According to an eighth aspect, a computer-readable storage medium is provided. The computer-readable storage medium is configured to store a computer program or instructions. When the computer program or the instructions are run, the method performed by the mobility management network element or the session management network element in the foregoing aspects is implemented.

According to a ninth aspect, a computer program product including instructions is provided. When the computer program product runs on a computer, the method in the foregoing aspects is implemented.

According to a tenth aspect, a chip system is provided, and includes a processor and an interface. The processor is configured to invoke instructions from the interface and run the instructions, so that the chip system implements the method in the foregoing aspects.

### BRIEF DESCRIPTION OF DRAWINGS

FIG. 1A is a schematic diagram of an architecture of a communication system according to this application;
FIG. 1B is a schematic diagram of an application scenario according to an embodiment of this application;
FIG. 2, and FIG. 4 to FIG. 10 are flowcharts of several communication methods according to embodiments of this application;
FIG. 3 is a schematic diagram of set thresholds according to an embodiment of this application;
FIG. 11 is a schematic diagram of an apparatus according to an embodiment of this application; and
FIG. 12 is a schematic diagram of another apparatus according to an embodiment of this application.

### DESCRIPTION OF EMBODIMENTS

To make objectives, technical solution, and advantages of embodiments of this application clearer, the following further describes embodiments of this application in detail with reference to the accompanying drawings.

The following describes some terms or concepts in embodiments of this application, to facilitate understanding of a person skilled in the art. In embodiments of this application, a communication apparatus configured to implement a function of a network device may be a network device, or may be an apparatus, for example, a chip system, that can support the network device in implementing the function. The apparatus may be installed in the network device. In the technical solutions provided in embodiments of this application, an example in which the apparatus configured to implement the function of the network device is the network device is used for describing the technical solutions provided in embodiments of this application.

In embodiments of this application, unless otherwise specified, a quantity of nouns represents "a singular noun or a plural noun", that is, "one or more". "At least one" means one or more, and "a plurality of" means two or more than two. "And/or" describes an association relationship for describing associated objects and represents that three relationships may exist. For example, A and/or B may represent the following cases: Only A exists, both A and B exist, and only B exists, where A and B may be singular or plural. The character "/" usually represents an "or" relationship between the associated objects. For example, A/B represents A or B. "At least one of the following items (pieces)" or a similar expression thereof refers to any combination of these items, including any combination of singular items (pieces) or plural items (pieces). For example, at least one item (piece) of a, b, or c indicates a, b, c, a and b, a and c, b and c, or a, b, and c, where a, b, and c may be singular or plural.

Ordinal numerals such as "first" and "second" mentioned in embodiments of this application are used to distinguish between a plurality of objects, and are not intended to limit sizes, content, a sequence, a time sequence, priorities, importance degrees, or the like of the plurality of objects. For example, first request information and second request information may be same information or different information. In addition, this denotation does not represent that the two pieces of information are different in content, sizes, transmit ends and/or receive ends, sending time, priorities, importance degrees, or the like. In addition, step numbers in embodiments described in this application are merely used to distinguish between different steps, but are not used to limit a sequence of the steps. For example, S201 may be performed before or after S202, or may be simultaneously performed with S202.

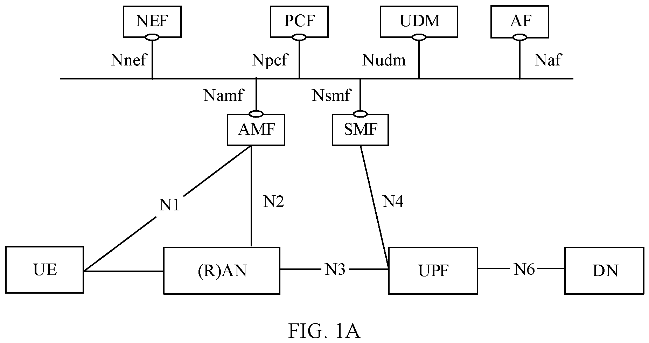

FIG. 1A is a possible architecture of a communication system to which a communication method provided in this application is applicable. The architecture of the communication system may include a radio access network, a terminal device, and a core network. For example, in the architecture of the communication system, the radio access network may include an access network device.

In embodiments of this application, the terminal device is a device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect a person, a thing, a machine, and the like, and may be widely used in various scenarios, for example, including but not limited to the following scenarios: cellular communication, device-to-device (device-to-device, D2D) communication, vehicle to everything (vehicle to everything, V2X), machine-to-machine/machine-type communication (machine-to-machine/machine-type communication, M2M/MTC), internet of things (internet of things, IoT), virtual reality (virtual reality, VR), augmented reality (augmented reality, AR), industrial control (industrial control), self-driving (self-driving), telemedicine (remote medical), a smart grid (smart grid), smart furniture, smart office, a smart wearable, smart transportation, a smart city (smart city), an uncrewed aerial vehicle, and a robot. The terminal device may sometimes be referred to as a user equipment (user equipment, UE), a terminal, an access station, UE station, a remote station, a wireless communication device, a user apparatus, or the like. For ease of description, in embodiments of this application, an example in which the terminal device is the UE is used for description.

The access network device is a device having a wireless transceiver function, and is configured to communicate with the terminal device. The access network device includes but is not limited to a base station (a base transceiver station (base transceiver station, BTS), a NodeB, an eNodeB/eNB, or a gNodeB/gNB), a transmission reception point (transmission reception point, TRP), a base station evolved after a 3rd generation partnership project (3rd generation partnership project, 3GPP), an access node in a wireless fidelity (wireless fidelity, Wi-Fi) system, a wireless relay node, a wireless backhaul node, and the like. The base station may be a macro base station, a micro base station, a pico base station, a small cell, a relay station, or the like. A plurality of base stations may support networks using a same access technology or using different access technologies. The base station may include one or more co-site or non-co-site transmission reception points. The access network device may alternatively be a radio controller, a central unit (central unit, CU), and/or a distributed unit (distributed unit, DU) in a cloud radio access network (cloud radio access network, CRAN) scenario. For example, an access network device in a vehicle to everything (vehicle to everything, V2X) technology may be a road side unit (road side unit, RSU). The following uses an example in which the access network device is the base station for description. The base station may communicate with the terminal device, or may communicate with the terminal device via the relay station. The terminal device may communicate with a plurality of base stations in different access technologies.

A device in the core network includes but is not limited to a device configured to implement functions such as mobility management, data processing, session management, and policy and charging. A 5G system is used as an example. The core network device may include a network exposure function (network exposure function, NEF) network element, a policy control function (policy control function, PCF) network element, a unified data management (unified data management, UDM) network element, an application function (application function, AF) network element, an access and mobility management function (access and mobility management function, AMF) network element, a session management function (session management function, SMF) network element, a user plane function (user plane function, UPF) network element, and the like.

The access and mobility management function network element may be configured to manage access control and mobility of the UE. During actual application, the access and mobility management function network element includes a mobility management function in a mobility management entity (mobility management entity, MME) in a long term evolution (long term evolution, LTE) network framework, and further includes an access management function. The access and mobility management function network element may be specifically responsible for registration of the UE, mobility management, a tracking area update procedure, reachability detection, selection of the SMF network element, mobility state transition management, and the like. For example, in the 5G system, the access and mobility management function network element may be the AMF network element, as shown in FIG. 1A. In a future communication system, for example, in a 6G system, the access and mobility management function network element may still be the AMF network element, or may have another name. This is not limited in embodiments of this application. When the access and mobility management function network element is the AMF network element, the AMF network element may provide an Namf service.

The session management function network element may be configured to be responsible for session management (including session establishment, modification and release, and maintenance of a tunnel between the user plane function network element and the access network device) of the terminal device, selection and re-selection of the user plane function network element, internet protocol (internet protocol, IP) address allocation (including optional authorization) of the UE, traffic routing configuration in the user plane function network element, quality of service (quality of service, QoS) control, and the like. The session management function network element is a termination point of a session management part in a non-access stratum (non-access stratum, NAS) message. For example, in the 5G system, the session management function network element may be the SMF network element, as shown in FIG. 1A. In the future communication system, for example, in the 6G system, the session management function network element may still be the SMF network element, or may have another name. This is not limited in embodiments of this application. When the session management function network element is the SMF network element, the SMF network element may provide an Nsmf service.

The user plane function network element is responsible for forwarding and receiving user data of the UE. The UPF network element may receive user data from a data network, and send the user data to the UE through the access network device. The UPF network element may further receive user data from the UE through the access network device, and forward the received user data to the data network. For example, in the 5G system, the user plane function network element may be the UPF network element, as shown in FIG. 1A. In the future communication system, for example, in the 6G system, the user plane function network element may still be the UPF network element, or may have another name. This is not limited in embodiments of this application.

The unified data management function network element is configured to generate an authentication credential, process a user identifier (for example, store and manage a permanent user identity), control access authorization, and manage subscription data. For example, in the 5G system, the unified data management function network element may be the UDM network element, as shown in FIG. 1A. In the future communication system, for example, in the 6G system, the unified data management function network element may still be the UDM network element, or may have another name. This is not limited in embodiments of this application. When the unified data management function network element is the UDM network element, the UDM network element may provide an Nudm service.

The data network (data network, DN) is a service network that provides a user with a data transmission service, such as an IP multimedia service (IP multimedia service, IMS) and the internet (Internet).

The foregoing mainly describes some network elements that may be used in embodiments of this application. In addition, FIG. 1A further includes other network elements. Details are not described herein.

The UE accesses the DN through a protocol data unit (protocol data unit, PDU) session established between the UE and the DN.

Each network element in the core network may also be referred to as a functional entity or a device, and may be a network element implemented on dedicated hardware, a software instance running on the dedicated hardware, or an instance of a virtualization function on a proper platform. For example, the foregoing virtualization platform may be a cloud platform.

The AMF network element may be connected to the access network device through an N2 interface, the access network device may be connected to the UPF network element through an N3 interface, the SMF network element may be connected to the UPF network element through an N4 interface, the AMF network element may be connected to the UE through an N1 interface, and the UPF may be connected to the DN through an N6 interface. An interface name is merely an example for description. This is not specifically limited in embodiments of this application. It should be understood that embodiments of this application are not limited to the communication system shown in FIG. 1A. Names of the network elements shown in FIG. 1A are merely used as examples for description herein, and constitute no limitation on network elements included in an architecture of a communication system to which the method in embodiments of this application is applicable. The following describes functions of some network elements or devices in the communication system. Names of devices that implement core network functions in systems of different access technologies may be different. This is not limited in embodiments of this application.

It should be noted that the communication system shown in FIG. 1A does not constitute a limitation on a communication system to which embodiments of this application are applicable. The architecture of the communication system shown in FIG. 1A is an architecture of the 5G system. Optionally, in addition to being applied to the 5G system, the technical solutions provided in embodiments of this application may be further applied to a 4th generation (4th generation, 4G) mobile communication technology system, for example, an LTE system, or may be further applied to a next generation mobile communication system or another similar communication system. This is not specifically limited.

It should be noted that the architecture of the communication system shown in FIG. 1A is not limited to including only the network elements shown in the figure, and may further include another device that is not represented in the figure. Details are not listed herein.

It should be noted that a distribution form of the network elements is not limited in embodiments of this application. The distribution form shown in FIG. 1A is merely an example, and is not limited in embodiments of this application.

For ease of description, the network elements shown in FIG. 1A are used as examples for describing the following embodiments of this application, and an XX network element is directly referred to as an XX for short. For example, the SMF network element is referred to as an SMF for short, and the AMF network element is referred to as an AMF for short. It should be understood that names of all network elements in embodiments of this application are merely used as examples, and there may be other names in future communication. Alternatively, in future communication, the network elements in embodiments of this application may be replaced with other entities, devices, or the like that have same functions. This is not limited in embodiments of this application. Unified descriptions are provided herein, and details are not described below again.

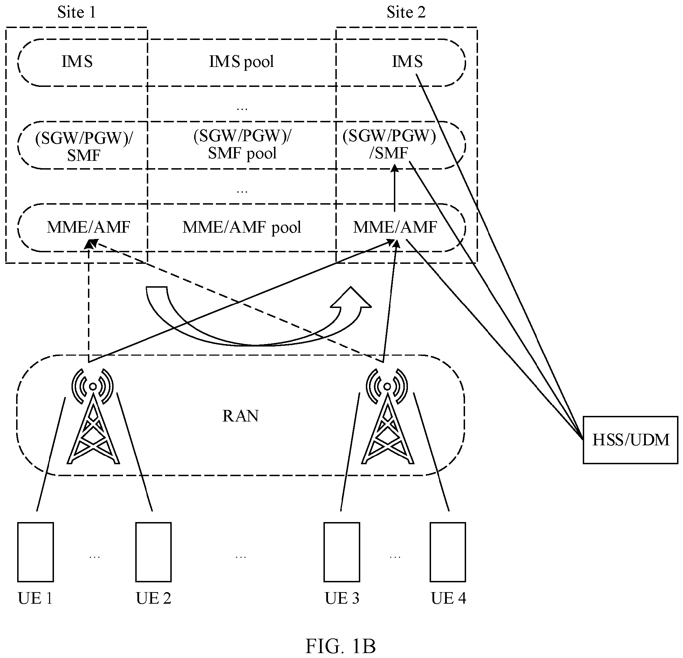

Further, FIG. 1B is a schematic diagram of an application scenario according to an embodiment of this application. In FIG. 1B, two sites are used as an example. In actual deployment, a plurality of sites may be included. An MME/AMF may be deployed in a form of a pool, and a/an gateway/SMF may also be deployed in the form of a pool. For example, in FIG. 1B, gateways/SMFs of different sites may also be deployed in the form of a pool. In addition, internet protocol multimedia subsystems (internet protocol multimedia subsystems, IMSs) of different sites may also be deployed in the form of a pool. For this, refer to FIG. 1B. For example, before a site 1 is faulty, UE 1 to UE 4 in FIG. 1B all access the site 1. When the site 1 is faulty, a radio access network (radio access network, RAN) sends user signaling of an MME/AMF of the site 1 to an MME/AMF of a site 2. Correspondingly, user signaling of a/an gateway/SMF of the site 1 is also accessed by the RAN to a/an gateway/SMF of the site 2. In this case, signaling of the UE 1 to the UE 4 is accessed to the gateway/SMF of the site 2. In addition, the IMS and an/a HSS/UDM may be relayed through a relay device, an/a SGW/PGW/SMF and the HSS/UDM may be relayed through a relay device, and the MME/AMF and the HSS/UDM may also be relayed through a relay device. The three types of relay devices may be a same relay device or different relay devices, and are not shown in FIG. 1B.

To better describe embodiments of this application, the following describes methods provided in embodiments of this application with reference to the accompanying drawings. In the accompanying drawings corresponding to embodiments of this application, all optional steps are represented by dashed lines. The methods provided in embodiments of this application are applicable to the network architecture shown in FIG. 1B. For example, UE in embodiments of this application is any one or more of the UE 1 to the UE 4 in FIG. 1B. A mobility management network element or a mobility management network element 2 in embodiments of this application is the MME or the AMF of the site 2 in FIG. 1B, and a mobility management network element 1 in embodiments of this application is the MME or the AMF of the site 1 in FIG. 1B. A user management network element in embodiments of this application is the HSS or the UDM of the site 2 in FIG. 1B. A session management network element in embodiments of this application is the gateway or the SMF of the site 2 in FIG. 1B. An access network element in embodiments of this application is the RAN in FIG. 1B. In addition, some or all of embodiments of this application may mention a concept of a "lower-standard" network. Unified descriptions are provided herein: If UE currently camps on a 4G network, the lower-standard network may refer to a 3G network or a 2G network if the UE falls back to the lower-standard network; and correspondingly, a "higher-standard" network corresponding to the 2G network or the 3G network serving as the lower-standard network may be the 4G network. Alternatively, if UE currently camps on a 5G network, the lower-standard network may be a 4G network if the UE falls back to the lower-standard network; and correspondingly, a "higher-standard" network corresponding to the 4G network serving as the lower-standard network may be the 5G network.

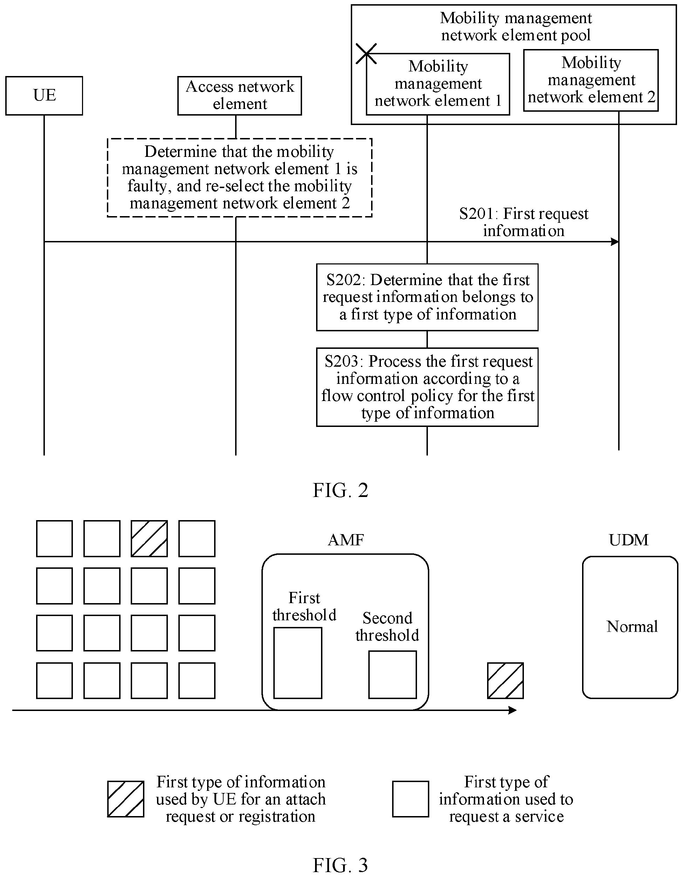

FIG. 2 is a schematic diagram of a communication method according to an embodiment of this application. It should be noted that a mobility management network element 1 in the figure is a faulty network element, and a symbol "×" indicates a failure or malfunction. The method may include the following steps.

S201: UE sends first request information.

For example, the UE sends the first request information to a mobility management network element 2 through an access network element. Specifically, a mobility management network element accessed by the UE is the mobility management network element 1, but the mobility management network element 1 is faulty. If the access network element determines that the mobility management network element 1 is faulty, the access network element may re-select a normal mobility management network element from a mobility management network element pool, for example, the mobility management network element 2. In this case, the access network element may send the first request information to the mobility management network element 2 that normally works. Optionally, transmission of a heartbeat packet may be maintained between the access network element and the mobility management network element. The access network element may determine, based on an abnormality of a heartbeat packet between the access network element and the mobility management network element 1, that the mobility management network element 1 is faulty.

For example, the first request information is used to request a service, and the service requested by using the first request information is referred to as a first service. Optionally, the first request information is a service request.

Alternatively, the first request information may be used by the UE to make an attach request (which may also be understood as that the first request information is attach request information of the UE). For example, the first request information is used by the UE to request to attach (attach) to the mobility management network element 2. For example, the first request information is an attach request (attach request). Alternatively, the first request information may be used by the UE to make a registration (registration) request, which may also be understood as that the first request information is registration request information of the UE. For example, the first request information is used by the UE to request to register with the mobility management network element 2. For example, the first request information is a registration request (registration request).

Alternatively, the first request information may be used to request to establish a session (which may also be understood as that the first request information is session establishment request information of the UE). For example, the first request information is used to request to establish a public data network (public data network, PDN) connection or a protocol data unit (protocol data unit, PDU) session. For example, if this embodiment of this application is applied to a 4G system, the first request information is used to request to establish a voice PDN connection or a data PDN connection. For another example, if this embodiment of this application is applied to a 5G system, the first request information is used to request to establish a data PDU session or a voice PDU session.

S202: The mobility management network element 2 determines that the first request information belongs to a first type of information.

The first type of information may be disaster recovery information. For example, the first type of information is information that originally needs to be processed by a mobility management network element other than the mobility management network element 2. In other words, an original receiving network element of the first type of information is not the mobility management network element 2. The original receiving network element of the first type of information is a faulty mobility management network element. A mobility management network element that fails or is overloaded due to a capacity limitation may be considered as a faulty mobility management network element. It should be noted that the receiving network element of the first type of information is not an access network element that serves as a relay network element, but an original mobility management network element to which the first type of information originally needs to be sent. Therefore, in this embodiment of this application, the original receiving network element of the first type of information is the faulty mobility management network element.

If the first request information is used to request the service, or used by the UE to make the attach or registration request, in a possible manner of this step, the mobility management network element 2 may determine that a mobility management network element indicated by first information included in the first request information is different from the mobility management network element 2. The mobility management network element indicated by the first information is an original receiving network element of the first request information. If the first request information is used to request the service, the first information may include MME code (MME code, MMEC), or an AMF set identifier (AMF set ID) and an AMF pointer (AMF pointer). If the first request information is used by the UE to make the attach or registration request, the first information may include a globally unique MME identifier (globally unique MME identifier, GUMMEI) or MMEC, or a globally unique AMF identifier (globally unique AMF identifier, GUAMI), or an AMF set ID and an AMF pointer.

If the first request information is used to request to establish the session, in a possible manner of this step, the mobility management network element 2 may determine that a mobility management network element indicated by information corresponding to the first request information is different from the mobility management network element 2, and the session corresponding to the first request information is a first type of session. If the first request information is used to request to establish the session, the first type of information corresponds to a first type of service session. The service session is referred to as a session for short below. For example, a correspondence between the first type of information and the first type of session means that the first type of information is information used to request to establish the first type of session. For example, if this embodiment of this application is applied to the 4G system, the first request information is used to request to establish the voice PDN connection, that is, the first type is a voice type. For another example, if this embodiment of this application is applied to the 5G system, the first request information is used to request to establish the data PDU session, that is, the first type is a data type.

The information corresponding to the first request information is, for example, information received by the mobility management network element 2 from a transmit end of the first request information before the mobility management network element 2 receives the first request information. For example, the information corresponding to the first request information includes information used to request a service, and/or information used to request to attach to or register with a core network. The information used to request the service is, for example, a service request, and the information used to request to attach to or register with the core network is, for example, an attach request or a registration request. This may be understood as that the mobility management network element 2 first receives the information corresponding to the first request information from the UE, and the mobility management network element 2 may determine a mobility management network element indicated by the information corresponding to the first request information (for a determining manner, refer to the foregoing descriptions). The mobility management network element indicated by the information corresponding to the first request information may be considered as a mobility management network element corresponding to the first request information. Therefore, the mobility management network element 2 may determine, based on the mobility management network element indicated by the information corresponding to the first request information and a type of the session corresponding to the first request information, whether the first request information belongs to the first type of information.

S203: The mobility management network element 2 processes the first request information according to a flow control policy for the first type of information.

The mobility management network element 2 may perform flow control on the first type of information, that is, the first type of information is a flow control object. Therefore, if the first request information belongs to the first type of information, S203 may be performed.

For example, if the first type of information is the disaster recovery information, the mobility management network element 2 performs flow control on the first type of information to alleviate impact on services of users who originally access the mobility management network element 2.

Optionally, the mobility management network element 2 may set a threshold A, and perform, by using the threshold A, flow control on the first type of information used to request the service. For example, the first request information is used to request the service. In this case, if an amount of the first type of information (or the first type of information used to request the service) received by the mobility management network element 2 is less than the threshold A, the mobility management network element 2 may process the first request information, that is, the mobility management network element 2 does not ignore the first request information. For example, a manner in which the mobility management network element 2 processes the first request information is to query a context of UE corresponding to request information A (that is, UE that sends the request information A), to determine a manner of processing the request information A. However, the UE originally needs to access the faulty MME 1, and the context of the UE is maintained in the MME 1. Therefore, the MME 2 cannot find the context of the UE. In this case, the MME 2 may send first reject information to the UE, to reject the service requested by using the first request information. Ignoring herein may also be understood as discarding or not processing. This is not limited in this application.

In embodiments of this application, if an amount of a received type of information is to be compared with a threshold, the amount of the type of information is, for example, an amount of the type of information received by the mobility management network element 2 since the flow control policy is started, or an amount of the type of information received by the mobility management network element 2 since the mobility management network element 2 starts (in other words, starts to work). For example, if the mobility management network element 2 is to compare an amount of a first type of information received by the mobility management network element 2 with the threshold A, the amount of the first type of information for comparison is, for example, an amount of the first type of information received by the mobility management network element 2 since the flow control policy is started, or the amount of the first type of information received by the mobility management network element 2 since the mobility management network element 2 starts. Alternatively, statistics may be collected, in a specific periodicity, on an amount of a type of information for comparison with a threshold. A length, a start moment, and the like that are of the periodicity are not limited in embodiments of this application. Alternatively, statistics may be collected, in a specific period of time, on an amount of a type of information for comparison with a threshold. Similarly, a length, a timing start moment, and the like that are of the period of time are not limited in embodiments of this application. Similar features are not described again below.

If the amount of the first type of information (or the first type of information used to request the service) received by the mobility management network element 2 is greater than or equal to the threshold A, the mobility management network element 2 may ignore the first request information, to be specific, the MME 2 does not process the request information A, and does not send a response related to the request information A to the UE. For example, the first request information is the service request. In the 4G system or the 5G system, if no response is received after the service request is sent, the UE may re-send the service request every five seconds (second, s). If no response is received after the service request is re-sent four times, the UE re-sends the service request every 60 seconds.

Alternatively, the mobility management network element 2 performs flow control on the first type of information used to request the service, and a quantity threshold (for example, the threshold A) may not be used as a threshold involved in the flow control policy, but a rate threshold is used. For example, the mobility management network element 2 compares, with a threshold D, a rate of the first type of information (or the first type of information used to request the service) received by the mobility management network element 2. For a comparison manner and a processing manner after comparison, refer to the comparison manner and the processing manner that correspond to the threshold A. In embodiments of this application, the quantity threshold is used as an example for description.

Optionally, the mobility management network element 2 may set a threshold B, and perform, by using the threshold B, flow control on a first type of information used by the UE to request the attachment or registration. For example, if the first request information is used by the UE to request the attachment or registration, the mobility management network element 2 may process the first request information, in other words, the mobility management network element 2 does not ignore the first request information if the amount of the first type of information (or the first type of information used by the UE to request the attachment or registration) received by the mobility management network element 2 is less than the threshold B; or the mobility management network element 2 may ignore the first request information if the amount of the first type of information (or the first type of information used by the UE to request the attachment or registration) received by the mobility management network element 2 is greater than or equal to the threshold B.

If the mobility management network element 2 processes the first request information, a processing manner is, for example: The mobility management network element 2 sends first response information to the UE. If the mobility management network element 2 does not consider a first event, or if the first event is not met (or that the first event is "not met" may be described as "not belonging to" the first event), the first response information may also be referred to as first accept information, and the first accept information may indicate that attach request information is accepted (where, in this case, the first request information is the attach request information), or that registration request information is accepted (where, in this case, the first request information is the registration request information); or if the first event is met (or that the first event is "met" may be described as "belonging to" the first event), the first response information may indicate that processing of the first request information is rejected. The first event is described below.

Alternatively, the mobility management network element 2 performs flow control on the first type of information used by the UE to request the attachment or registration, and a quantity threshold (for example, the threshold B) may not be used as a threshold involved in the flow control policy, but a rate threshold is used. For example, the mobility management network element 2 compares, with a threshold E, a rate of the first type of information (or the first type of information used by the UE to request the attachment or registration) received by the mobility management network element 2. For a comparison manner and a processing manner after comparison, refer to the comparison manner and the processing manner that correspond to the threshold B. In embodiments of this application, the quantity threshold is used as an example for description.

If the mobility management network element 2 processes the first request information, before sending the first response information to the UE, the mobility management network element 2 may further request a user management network element to obtain subscription data of the UE, or request to update a location of the UE (in other words, request to update location information of the UE). If the mobility management network element 2 obtains the subscription data of the UE from the user management network element, or successfully updates the location of the UE, the mobility management network element 2 may send the first response information to the UE, to indicate that the attach request information is accepted or that the registration request information is accepted.

When the mobility management network element 2 processes the first request information, if the first event is met (or that the first event is "met" may be described as "belonging to" the first event, or may be described as that the first event is met, which is not limited in this application), the mobility management network element 2 may be incapable of obtaining the subscription data of the UE from the user management network element, or updating the location of the UE through the user management network element. In this case, the first response information is reject response information, for example, the first response information may be referred to as second reject information. Optionally, in this case, the second reject information may further include a first reject cause value, and the first reject cause value may indicate the UE to continue to attempt to connect, so that the UE does not need to fall back to a lower-standard network.

Optionally, the first event may include one or more of the following: an event 1, an event 2, an event 3, or an event 4. The following describes these events.

The event 1 is an event in which the mobility management network element 2 receives no response after sending second request information to the user management network element. The second request information may be used to request to obtain the subscription data of the UE or update the location. The second request information is, for example, information sent by the mobility management network element 2 to the user management network element after the mobility management network element 2 receives the first request information. Therefore, the mobility management network element 2 may send the reject response information to the UE if no response is received from the user management network element. In a possible case, the user management network element is congested or faulty.

The event 2 is an event in which, after the mobility management network element 2 sends a plurality of pieces of third request information to the user management network element, a proportion of an amount of third request information for which no response is received to the plurality of pieces of third request information is greater than or equal to a third threshold. The third request information may be used to request to obtain the subscription data of the UE or update the location. For example, the mobility management network element 2 may have received, from one or more UEs, information used to request the attachment or registration. In this case, the mobility management network element 2 may also send one or more pieces of third request information to the user management network element. It should be noted that UE corresponding to information requested by using the third request information is the UE that sends the first request information; or the third request information corresponding to the first request information may not be included.

The event 3 is an event in which the mobility management network element 2 sends a plurality of pieces of fourth request information to the user management network element, and in responses that are to the fourth request information and that are received by the mobility management network element 2 from the user management network element, a proportion of fourth request information corresponding to a response indicating rejection to the plurality of pieces of fourth request information is greater than or equal to a fourth threshold. The mobility management network element 2 may have received, from one or more UEs, information used to request the attachment or registration. In this case, the mobility management network element 2 may also send one or more pieces of fourth request information to the user management network element. After the mobility management network element sends the fourth request information to the user management network element, if the user management network element is capable of processing the received information, the user management network element should return, to the mobility management network element, a response to the fourth request information, where the response includes, for example, the subscription data of the UE; or if the user management network element is incapable of processing the received information, for example, the user management network element is congested, the user management network element may not return, to the mobility management network element, a response to the fourth request information, or the user management network element may alternatively return, to the mobility management network element, a response to the fourth request information, where the response is, for example, a reject response, in other words, the response indicates rejection. It should be noted that a plurality of pieces of fourth request information used to be compared with the fourth threshold may include fourth request information corresponding to the first request information, or may not include fourth request information corresponding to the first request information.

The event 4 is that an amount of information that is sent by the mobility management network element 2 to the user management network element and that is used to obtain the subscription data or update the location is greater than or equal to a fifth threshold. If the amount of information that is sent by the mobility management network element 2 to the user management network element and that is used to obtain the subscription data or request to update the location is greater than or equal to the fifth threshold, in other words, information that is received by the user management network element and that is used to obtain the subscription data or request to update the location has exceeded a processing capability of the user management network element, the mobility management network element 2 may also return rejection to the UE in this case.

The foregoing describes the flow control policy for the first type of information when the first type of information is used to request the service or used by the UE to request the attachment or registration. In addition, the first type of information may be further used to request to establish the session. In this case, a corresponding flow control policy may also be used to perform flow control on the first type of information. Optionally, the mobility management network element 2 may set a threshold C, and perform, by using the threshold C, flow control on the first type of information used to request to establish the session. For example, the first request information is used to request to establish the session. If the amount of the first type of information (or the first type of information used to request to establish the session) received by the mobility management network element 2 is less than the threshold C, the mobility management network element 2 may process the first request information. For example, a manner in which the mobility management network element 2 processes the first request information is that the mobility management network element 2 sends first response information to the UE, to indicate that the session is successfully established or unsuccessfully established. If the amount of the first type of information (or the first type of information used to request to establish the session) received by the mobility management network element 2 is greater than or equal to the threshold C, the mobility management network element 2 may ignore the first request information. The threshold C may also be referred to as a sixth threshold.

Alternatively, the mobility management network element 2 performs flow control on the first type of information used to request to establish the session, and a quantity threshold (for example, the threshold C) may not be used as a threshold involved in the flow control policy, but a rate threshold is used. For example, the mobility management network element 2 compares, with a threshold F, a rate of the first type of information (or the first type of information used to request to establish the session) received by the mobility management network element 2. For a comparison manner and a processing manner after comparison, refer to the comparison manner and the processing manner that correspond to the threshold C. In embodiments of this application, the quantity threshold is used as an example for description.

In embodiments of this application, if a threshold is the rate threshold, a rate of the first type of information compared with the threshold is, for example, a rate of one piece of the first type of information, or an average rate of a plurality of pieces of the first type of information. For example, if the threshold A is the rate threshold, a rate of the first type of information compared with the threshold A is, for example, a rate of one piece of the first type of information, or an average rate of a plurality of pieces of the first type of information.

The threshold A, the threshold B, and the threshold C may be a same threshold or different thresholds. Alternatively, any two of the threshold A, the threshold B, and the threshold C are a same threshold, and the other is a different threshold. If the threshold A and the threshold B are different thresholds, in some optional implementations, for example, the threshold A may also be referred to as a first threshold, and the threshold B may also be referred to as a second threshold. It may be understood that in embodiments of this application, different flow control policies are set for different types of signaling. For example, for the information used to request the service, a used flow control policy is performing flow control based on the first threshold. For another example, for signaling used by the UE to request the attachment or registration, a used flow control policy is, for example, performing flow control based on the second threshold. In this manner, differentiated flow control measures may be taken for different types of signaling, so that a flow control process better complies with a feature of corresponding signaling, to achieve a better flow control effect.

Optionally, in embodiments of this application, for example, a manner in which a network element ignores a piece of information is that the network element discards the piece of information. Details are not described again below. For example, a manner in which the mobility management network element ignores the first request information is that the mobility management network element 2 discards the first request information.

It can be learned from the foregoing descriptions that, after the mobility management network element 2 performs flow control on the first type of information, some information may continue to be processed (or some information may not be ignored), and processing of the user management network element is involved in a continued processing process. In this case, the user management network element needs to process a large amount of information, and the amount of the information may exceed the processing capability of the user management network element. This may cause congestion, or even cause a large amount of information to be ignored by the user management network element due to the excessive amount of the information. As a result, network processing efficiency is reduced, and a service of the UE cannot be restored for a long time. It can be learned that, even if the mobility management network element 2 determines, through the flow control, to continue to process the first type of information, it is likely that some information is finally unsuccessfully processed due to a processing bottleneck of the user management network element. This is also a waste of network resources.

In view of this, embodiments of this application provide that the second threshold may be set based on a capability (or performance) of the user management network element, in other words, the second threshold is related to the performance of the user management network element. The second threshold is set, so that it can be ensured as much as possible that the first type of information (for example, the information used by the UE to request the attachment or registration) that the mobility management network element 2 determines to continue to process based on the second threshold can be successfully processed by the user management network element, thereby reducing a probability that the user management network element is congested, improving the network processing efficiency, and restoring the service of the UE as soon as possible. It should be noted that the second threshold is set based on the performance of the user management network element, and this is merely an optional solution. In another solution, the second threshold may alternatively be set based on another factor. This is not limited in embodiments of this application.

This is because information corresponding to the first threshold is associated with information corresponding to the second threshold. For example, after the mobility management network element 2 determines to continue to process the information corresponding to the first threshold, the UE may send the information corresponding to the second threshold again. For example, the first threshold may be set based on the second threshold. Therefore, after the mobility management network element 2 determines to continue to process the information corresponding to the first threshold, an amount of information that corresponds to the second threshold and that is sent by the UE is less than or equal to the second threshold, that is, after the information corresponding to the first threshold continues to be processed by the mobility management network element 2, the information that corresponds to the second threshold and that is sent by the UE can also continue to be processed by the mobility management network element 2 and the user management network element as much as possible. For example, if no response is received after the information used to request the attachment or registration is sent, the UE re-sends the information used to request the attachment or registration every 15 seconds plus 10 seconds. If no response is received after the information used to request the attachment or registration is re-sent four times, the UE falls back to the lower-standard network and re-attempts to return to a current network after 12 to 20 minutes. According to the technical solutions in embodiments of this application, the information used to request the attachment or registration can be processed by the mobility management network element 2 and the user management network element as much as possible, to reduce a case in which the UE receives no response, and reduce the probability that the UE falls back to the lower-standard network.

Optionally, the first threshold is within a first range. A lower limit of the first range is N₁ times of the second threshold, and an upper limit is N₂ times of the second threshold, where N₂ is greater than N₁. For example, if the mobility management network element 2 determines, through the flow control, to continue to process A₁ pieces of the information used to request the service, there may also be A₁ pieces of information that is re-initiated by the UE and that is used to request the attachment or registration, where A₁ is, for example, N₂ times of the second threshold. In this processing process, the mobility management network element 2 may ignore, based on the second threshold, A₂ pieces of the information used to request to attach to or register with the core network, where A₂ is, for example, (N₂-N₁) times of the second threshold. However, after the A₂ pieces of the information used to request to attach to or register with the core network are ignored, the UE attempts to send the information used to request the attachment or registration again. For example, the UE may have four attempts, and falls back to the lower-standard network only if the four attempts are unsuccessful. Setting a value of the first threshold to be N₁ to N₂ times of the second threshold can ensure as much as possible that, in processes of the four attempts of the UE, the information used to request the attachment or registration continues to be processed by the mobility management network element 2, thereby reducing the probability that the UE falls back to the lower-standard network. For example, N₁ = 1, and N₂ = 1.2.

Optionally, the first threshold and/or the second threshold may be predefined in a protocol, may be set by the mobility management network element 2, or may be manually set in the mobility management network element 2.

FIG. 3 is a schematic diagram of a first threshold and a second threshold. A blank box represents a first type of information used to request a service, and a box with slashes represents a first type of information used by UE to request attachment or registration. For a mobility management network element (for example, a mobility management network element 2), the first threshold and the second threshold may be set. Flow control can be separately performed on different types of information by setting the two thresholds. In addition, because the second threshold is set based on performance of a user management network element, information that is determined, by the mobility management network element 2 through the flow control, to continue to be processed and that is used by the UE to request the attachment or registration can be successfully processed by the user management network element.

In addition, in FIG. 3, an example in which the first threshold is greater than the second threshold is used. This is not limited in actual application. For example, the first threshold may alternatively be less than or equal to the second threshold.

In embodiments of this application, the mobility management network element 2 may perform flow control on the first type of information, and the first type of information may be information that should originally be processed by a mobility management network element 1. In this method, information about users who originally access the mobility management network element 2 can be processed, impact on the users is alleviated, and services can be guaranteed.

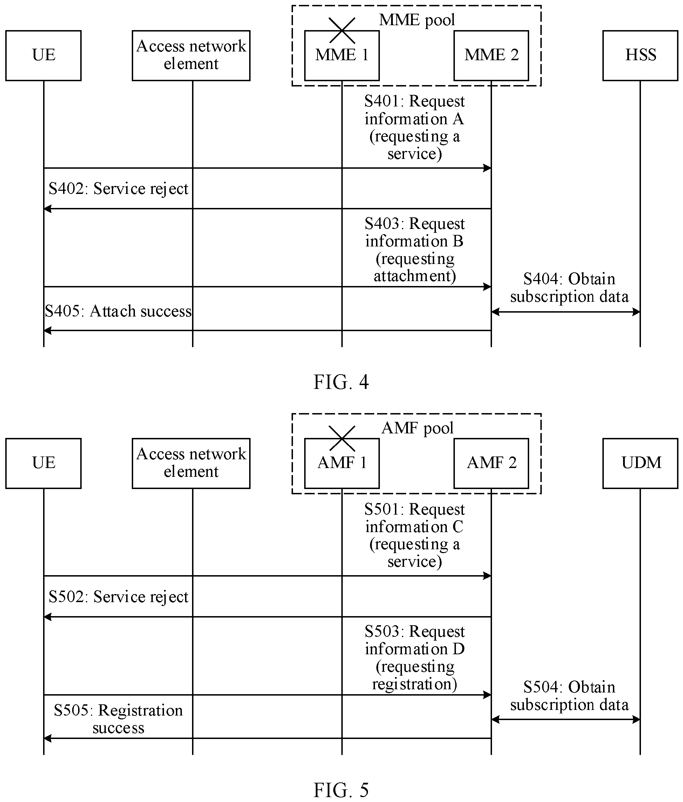

In the following description process, an example in which first request information is used to request a service or used by UE to request attachment or registration is used. First, a case in which the solutions provided in the embodiment shown in FIG. 2 are applied to a 4G system is described. FIG. 4 is a flowchart of this embodiment. In the embodiment shown in FIG. 4, an example in which a mobility management network element is an MME, and an access network element is an eNB is used. The method may include the following steps.

S401: UE sends request information A. For the request information A, refer to the descriptions of the first request information in the embodiment shown in FIG. 2. Therefore, for a manner in which the UE sends the request information A, refer to S201 in the embodiment shown in FIG. 2.

For example, the request information A is used to request a service, and the service requested by using the request information A may be referred to as a first service. Optionally, the request information A is a service request, or may be other information.

S402: The MME 2 sends first reject information to the UE.

For example, the MME 2 sends the first reject information to the UE through the eNB.

The first reject information may be service reject (service reject). Optionally, the service reject carries a reject cause value of #10, where #10 indicates being implicitly detached (implicitly detached).

In this embodiment of this application, an example in which the request information A belongs to a first type of information is used. The MME 2 may determine, based on first information included in the request information A, that the request information A belongs to the first type of information. Optionally, the first information may include MME code. An example in which the request information A is the service request is used. After receiving the service request, the MME 2 may obtain a system architecture evolution temporary mobile subscriber identity (SAE-temporary mobile subscriber identity, S-TMSI) information element of the UE from the service request, where an SAE is a system architecture evolution (system architecture evolution). The S-TMSI information element includes the MMEC and a mobility management entity temporary mobile subscriber identity (MME-temporary mobile subscriber identity, M-TMSI). For a manner in which the MME 2 determines, based on the first information, that the request information A belongs to the first type of information, refer to S202 in the embodiment shown in FIG. 2.

If the MME 2 determines that the request information A belongs to the first type of information, the MME 2 may perform flow control on the request information A based on the threshold A described in the embodiment shown in FIG. 2. For a manner in which the MME 2 performs flow control, refer to S203 in the embodiment shown in FIG. 2. After performing flow control, the MME 2 may process the request information A in different manners. In S402, an example in which the MME 2 does not ignore the request information A is used.

S403: The UE sends request information B. For the request information B, refer to the descriptions of the first request information in the embodiment shown in FIG. 2. Therefore, for a manner in which the UE sends the request information B, refer to S201 in the embodiment shown in FIG. 2.

For example, the request information B is used by the UE to request to attach (attach) to the MME 2, for example, the request information B is an attach request (attach request). An example in which the request information B is the attach request is used. When receiving the attach request, a mobility management network element B may obtain a globally unique temporary UE identity (globally unique temporary UE identity, GUTI) information element of the UE from the attach request, where the GUTI information element includes a GUMMEI and the M-TMSI. Alternatively, the first information may include the MMEC. An example in which the request information B is the attach request is used, and the MMEC may be included in the GUMMEI. In addition, for a manner in which the MME 2 determines, based on the first information, that the request information A belongs to the first type of information, refer to S202 in the embodiment shown in FIG. 2.

If the MME 2 determines that the request information B belongs to the first type of information, the MME 2 may perform flow control on the request information B based on the threshold B described in the embodiment shown in FIG. 2. For a manner in which the MME 2 performs flow control, also refer to S203 in the embodiment shown in FIG. 2. After performing flow control, the MME 2 may process the request information B in different manners. In S404, an example in which the MME 2 does not ignore the request information B is used.

S404: The MME 2 obtains subscription data of the UE from an HSS.

S405: The MME 2 sends an attach success message to the UE.

For example, the MME 2 sends the attach success message to the eNB, and the eNB may send the attach success message to the UE. Therefore, the UE may receive the attach success message from the eNB.

Then, the UE may continue to request to establish a data PDN connection, or establish a data PDN connection and a voice PDN connection, or the like. A subsequent operation is not limited.

For advantageous effects of the method shown in FIG. 4, refer to the descriptions of the embodiment shown in FIG. 2. Details are not described herein again.

The following describes a case in which the solutions of the embodiment shown in FIG. 2 are applied to a 5G system. FIG. 5 is a flowchart of this case. In the embodiment shown in FIG. 5, an example in which a mobility management network element is an AMF, and an access network element is a gNB is used. With reference to the method shown in FIG. 2, the method may include the following steps.

S501: UE sends request information C.

For the request information C, refer to the descriptions of the first request information in the embodiment shown in FIG. 2. Therefore, for a manner in which the UE sends the request information C, refer to the descriptions of S201 in the embodiment shown in FIG. 2.

For example, the request information C is used to request a service, and the service requested by using request information A may be referred to as a first service. Optionally, the request information C is a service request, or may be other information.

S502: An AMF 2 sends first reject information to the UE.

For example, the AMF 2 sends the first reject information to the gNB, and then the gNB sends the first reject information to the UE. The first reject information may be service reject. Optionally, the service reject may carry a cause value of #10.

In this embodiment of this application, an example in which request information A belongs to a first type of information is used. The AMF 2 may determine, based on first information included in the request information A, that the request information A belongs to the first type of information. Optionally, the first information may include an AMF set ID and an AMF pointer. An example in which the request information C is the service request is used. When receiving the service request, the AMF 2 may obtain a 5G-S-TMSI information element of the UE from the service request, where the 5G-S-TMSI information element includes the AMF set ID, the AMF pointer, and a 5G-TMSI. For a manner in which the AMF 2 determines, based on the first information, that the request information C belongs to the first type of information, refer to the descriptions of S202 in the embodiment shown in FIG. 2.

If the AMF determines that the request information C belongs to the first type of information, the AMF 2 may perform flow control on the request information C based on the threshold A described in the embodiment shown in FIG. 2. For a manner in which the AMF 2 performs flow control, also refer to S203 in the embodiment shown in FIG. 2. After performing flow control, the AMF 2 may process the request information C in different manners. In S502, an example in which the AMF 2 does not ignore the request information C is used.

S503: The UE sends request information D.

For the request information D, refer to the descriptions of the first request information in the embodiment shown in FIG. 2. Therefore, for a manner in which the UE sends the request information D, refer to S201 in the embodiment shown in FIG. 2.

For example, the request information D is used by the UE to request to register with the AMF 2. For example, the request information D is a registration request.

S504: The AMF 2 obtains subscription data of the UE from a UDM.

In this embodiment of this application, an example in which the request information D belongs to the first type of information is used. The AMF 2 may determine, based on first information included in the request information D, that the request information D belongs to the first type of information. Optionally, the first information may include a GUAMI. An example in which the request information D is the registration request is used. When receiving the registration request, the AMF 2 may obtain a 5G-GUTI information element of the UE from the registration request, where the 5G-GUTI information element includes the GUAMI and the 5G-TMSI. Alternatively, the first information may include the AMF set ID and the AMF pointer. An example in which the request information D is the registration request is used. The GUAMI further includes the AMF set ID and the AMF pointer. In addition, for a manner in which the AMF 2 determines, based on the first information, that the request information D belongs to the first type of information, refer to the descriptions of S202 in the embodiment shown in FIG. 2.

If the AMF determines that the request information D belongs to the first type of information, the AMF 2 may perform flow control on the request information D based on the threshold B described in the embodiment shown in FIG. 2. For a manner in which the AMF 2 performs flow control, also refer to S203 in the embodiment shown in FIG. 2. After performing flow control, the AMF 2 may process the request information D in different manners. In S504, an example in which the AMF 2 does not ignore the request information D is used.

S505: The AMF 2 sends a registration success message to the UE. For example, the AMF 2 sends the registration success message to the UE through the gNB.

Then, the UE may continue to request to establish a data PDU session, a voice PDU session, and/or the like. A subsequent operation is not limited.

For advantageous effects of the method shown in FIG. 5, refer to the descriptions of the embodiment shown in FIG. 2. Details are not described herein again.

It can be learned from the foregoing descriptions that the first type of information may include a plurality of types of information, for example, may include information used to request a service, and may further include information used by the UE to request attachment or registration. When the service request information and the attach request/registration request information time out and no response is received, the UE has different behavior. Refer to Table 1.

**Table 1**

| Wireless standard | Procedure | UE behavior |
|---|---|---|
| 4G | Service request time-out | The UE re-sends the service request every five seconds four times, then continuously re-sends the service request every 60s, and does not fall back to a 2G network or a 3G network. |
| | Attach request time-out | The UE re-sends the attach request every 15 seconds plus 10 seconds four times, then falls back to the 2G network or the 3G network, and attempts to return to a 4G network after 12 to 20 minutes. |
| 5G | Service request time-out | The UE re-sends the service request every 15 seconds four times, then continuously re-sends the service request every 60s, and does not fall back to the 4G network. |
| | Registration request time-out | The UE re-sends the registration request every 15 seconds plus 10 seconds four times, then falls back to the 4G network, and attempts to return to a 5G network after 12 to 20 minutes. |

It can be learned that, in a 4G system or a 5G system, when the attach request/registration request information times out, the UE makes a re-attempt four times, and if still receiving no response, the UE falls back to a lower-standard network, and returns again and performs re-access after a period of time; and when the service request information times out, the UE camps on an original standard network for repeated re-attempts, and does not fall back to the lower-standard network. It should be understood that Table 1 in this application shows one of a plurality of cases. This is not limited in this application.

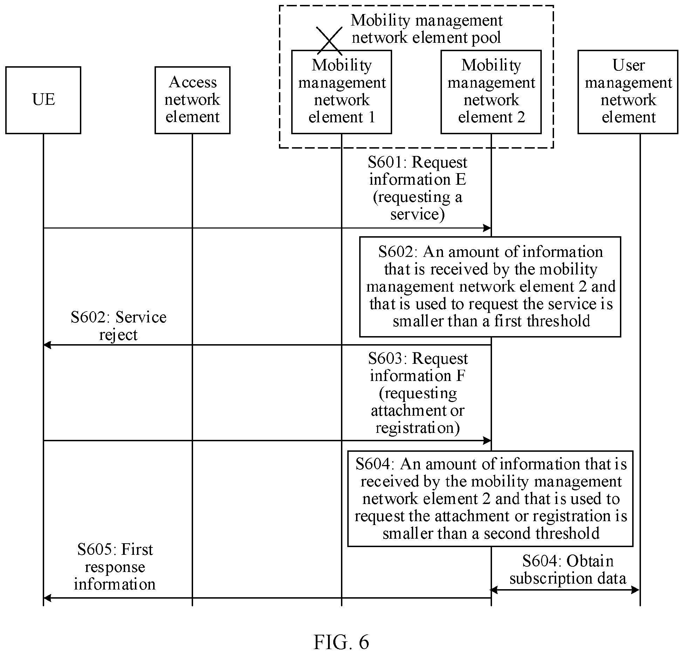

Therefore, if a same flow control policy is used for different types of information, a control granularity is coarse, and a good control effect cannot be achieved. As a result, the UE may fall back to the lower-standard network, and service restoration time is excessively long. Therefore, an embodiment of this application provides a communication method. In the method, different flow control policies may be used for different types of information, to achieve a better control effect. For example, if this embodiment of this application is applied to the 4G system, a mobility management network element may be an MME. Alternatively, if this embodiment of this application is applied to the 5G system, a mobility management network element may be an AMF. With reference to the method shown in FIG. 2, refer to FIG. 6. For a mobility management network element 2 in FIG. 6, refer to the descriptions of the mobility management network element 2 in the embodiment shown in FIG. 2. The method may include the following steps.

S601: UE sends request information E.

Correspondingly, the mobility management network element 2 receives the request information E.

The request information E is, for example, the first request information in the embodiment shown in FIG. 2. The request information E may be used to request a service, for example, request a first service. The request information E is, for example, a service request. For a manner in which the UE sends the request information E to the mobility management network element, refer to the descriptions in which the UE sends the first request information to the mobility management network element in S201 in the embodiment shown in FIG. 2.

S602: If an amount of information that is received by the mobility management network element 2 and that is used to request the service is less than a first threshold, the mobility management network element 2 sends first reject information to the UE. Correspondingly, the UE receives the first reject information from the mobility management network element 2.

The first reject information may be used to reject the service requested by using the first request information. Optionally, for descriptions of the first reject information, refer to the descriptions of S402 in the embodiment shown in FIG. 4.

If the mobility management network element 2 receives signaling whose amount exceeds a processing capability of the mobility management network element 2, the mobility management network element 2 may start a flow control policy. For example, a type of flow control policy is performing, based on the first threshold, flow control on the information used to request the service. For content such as the flow control policy and the first threshold, refer to the descriptions of the embodiment shown in FIG. 2.

For example, the mobility management network element 2 may first determine that the request information E belongs to a first type of information, and then perform flow control on the request information E based on the first threshold. For a manner in which the mobility management network element 2 determines whether the request information E belongs to the first type of information, refer to the descriptions of S202 in the embodiment shown in FIG. 2. For a policy in which the mobility management network element 2 performs flow control based on the first threshold, different processing manners for the request information E after the flow control, and the like, refer to the descriptions of S203 in the embodiment shown in FIG. 2.

S603: The UE sends request information F.

For a manner in which the UE sends the request information F to the mobility management network element 2, refer to the descriptions in which the UE sends the first request information to the mobility management network element in the embodiment shown in FIG. 2.

For example, if this embodiment of this application is applied to a 4G system, the request information F may be used by the UE to request attachment, for example, the request information F is an attach request. Alternatively, if this embodiment of this application is applied to a 5G system, the request information F may be used by the UE to request registration, for example, the request information F is a registration request.

For the request information F, refer to the descriptions of the first request information used by the UE to request attachment or registration in the embodiment shown in FIG. 2.

To be specific, if the UE receives the first reject information by performing S602, the UE considers that previous attachment (or registration) to a core network is unsuccessful, and therefore the UE may delete local session information, and send the request information F to request to attach to or register with the mobility management network element 2.

S604: If an amount of information that is received by the mobility management network element 2 and is used to request attachment or registration is less than a second threshold, the mobility management network element 2 obtains subscription data of the UE from a user management network element. It may be understood that if the amount of information that is received by the mobility management network element 2 and is used to request attachment or registration is less than the second threshold, the mobility management network element 2 may obtain the subscription data of the UE from the user management network element, request to update a location of the UE, or the like. In embodiments of this application, obtaining the subscription data of the UE is mainly used as an example. If the technical solutions in this embodiment of this application are applied to the 4G system, the user management network element is, for example, an HSS. If the technical solutions in this embodiment of this application are applied to the 5G system, the user management network element is, for example, a UDM.

It may be understood that because the request information F is information used to request to attach to or register with the core network, a flow control policy used by the mobility management network element 2 for the information is performing flow control based on the second threshold. For the second threshold, refer to the descriptions of the second threshold in the embodiment shown in FIG. 2. In addition, the mobility management network element 2 may first determine that the request information F belongs to the first type of information, and then perform flow control on the request information F based on the second threshold. For a manner in which the mobility management network element 2 determines whether the request information F belongs to the first type of information, refer to the descriptions of S202 in the embodiment shown in FIG. 2. For a policy in which the mobility management network element 2 performs flow control based on the second threshold, different processing manners for the request information F after the flow control, and the like, refer to the descriptions of S203 in the embodiment shown in FIG. 2.

In addition, for manners of setting the first threshold and the second threshold, refer to the descriptions of the embodiment shown in FIG. 2.

S605: The mobility management network element 2 sends first response information to the UE. For example, the mobility management network element 2 may send the first response information to the UE through an access network element.

After obtaining the subscription data of the UE, the mobility management network element 2 may send the first response information to the UE. For example, the first response information may also be referred to as first accept information. If the first request information is used by the UE to request the attachment (or the first request information includes attach request information of the UE), the first accept information may indicate that the UE is successfully attached, or the first accept information may indicate that the attach request information is accepted. If the first request information is used by the UE to request the registration (or the first request information includes registration request information of the UE), the first accept information may indicate that the UE is successfully registered, or the first accept information may indicate that the registration request information is accepted.

According to the technical solutions in embodiments of this application, the mobility management network element 2 may ignore information that is used to request the service and that exceeds the first threshold. However, for the information used to request the service, even if the information is ignored, the UE continues to camp on a current network for repeated attempts, and does not fall back to a lower-standard network. The mobility management network element 2 may continue to process information that is used to request the service and that is within the first threshold, so that the UE may continue to send the information used to request the attachment or registration. The mobility management network element 2 also continues to process, based on the second threshold, the information used by the UE to request the attachment or registration, and the information can also be successfully processed by the user management network element. Therefore, according to the technical solutions in embodiments of this application, flow control can be separately performed on different types of information, and a flow control granularity can be refined, to reduce a probability that the UE falls back to the lower-standard network, and improve service restoration efficiency. In addition, in embodiments of this application, flow control may be performed on all information without distinguishing the first type of information, to reduce overall pressure on the core network; or flow control may be performed only on the first type of information, where the first type of information is, for example, disaster recovery information, to alleviate impact on users who originally access the mobility management network element 2, and ensure service continuity of these users.

In a mobile network, the HSS/UDM is one of network elements with most centralized signaling, and is a network element in which three domains: GUL (global system for mobile communications (global system for mobile communications, GSM)/universal mobile telecommunications system (universal mobile telecommunications system, UMTS)/LTE)/5G/IMS converge. When signaling impact occurs on a network, especially when signaling surge occurs because a switchover is performed when a site is faulty, the HSS/UDM usually first becomes a bottleneck network element in signaling processing. When the HSS/UDM is overloaded or a link to the HSS/UDM is congested, an MME/AMF senses that a large amount of information is unsuccessfully sent to the HSS/UDM and starts the flow control. The MME/AMF rejects the attach request/registration request of the UE by including a special cause value, to control an amount of signaling information sent to the HSS/UDM, reduce the signaling impact on the HSS/UDM, and protect the HSS/UDM. Table 2 shows a relationship between the special cause value and UE behavior.

**Table 2**

| Network | Procedure and reject cause value | UE behavior |
|---|---|---|
| 4G network | Attach procedure, and reject cause value of #111 | The UE falls back to a 2G network or a 3G network and attempts to return to the 4G network after 12 to 20 minutes. |
| 5G network | Initial registration procedure, and reject cause value of #111 | The UE falls back to the 4G network and attempts to return to the 5G network after 12 to 20 minutes. |

It can be learned, according to Table 2 that, for a 4G UE or a 5G UE, if the attach request/registration request information is rejected, the MME/AMF currently usually responds with the reject cause value of #111. When the reject cause value is #111, it indicates "protocol error (protocol error) or unspecified (unspecified)". If the UE receives the reject cause value of #111, the UE is to fall back to the lower-standard network and perform access again after dozens of minutes. As a result, services of the UE cannot be restored for a long time.

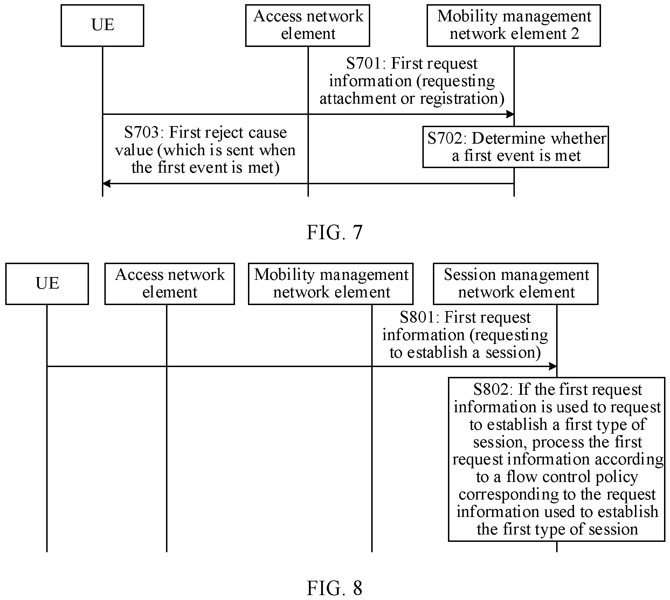

In view of this, an embodiment of this application provides a communication method. Refer to FIG. 7. The method includes the following steps.

S701: UE sends first request information.

For the first request information, refer to the descriptions of the first request information in FIG. 2. The first request information is, for example, the first request information used by the UE to request attachment or registration in FIG. 2. For this step, refer to the descriptions of step 201 in FIG. 2.

S702: A mobility management network element 2 determines whether a first event is met.

If the first event is not met, the mobility management network element 2 may process the first request information. For example, the mobility management network element 2 may request subscription data of the UE and/or request location update from a user management network element. If the first event is met, the mobility management network element 2 may return rejection to the UE to reject to process the first request information. For the first event, refer to the descriptions of the first event in S203 in the embodiment shown in FIG. 2.

S703: If the first event is met, the mobility management network element 2 sends first response information to the UE. For example, the mobility management network element 2 sends the first response information to an access network element, and the access network element then sends the first response information to the UE. In this case, the UE may receive the first response information from the access network element.

The first response information may include a first reject cause value. Optionally, the first reject cause value is, for example, #22, or may be another value. The first reject cause value of #22 may also be applied to the embodiment shown in FIG. 2, or the first reject cause value in the embodiment shown in FIG. 2 is different from that in the embodiment shown in FIG. 7. Table 3 shows a relationship between the reject cause value of #22 and UE behavior.

**Table 3**

| Network | Procedure and reject cause value | UE behavior |
|---|---|---|
| 4G network | Attach procedure, and #22 (indicating rejection) | The UE makes a re-attempt every 10 seconds four times, then falls back to a 2G network or a 3G network, and attempts to return to the 4G network after 12 to 20 minutes. |
| 5G network | Initial registration procedure, and #22 (indicating rejection) | The UE makes a re-attempt every 10 seconds four times, then falls back to the 4G network, and attempts to return to the 5G network after 12 to 20 minutes. |

It can be learned from Table 3 that if an attach request or a registration request is rejected, and the reject cause value is "#22 congestion (congestion)", the UE may perform a re-attempt every 10 seconds. If four consecutive re-attempts are still unsuccessful, the UE falls back to a lower-standard network, returns to a higher-standard network again after 12 to 20 minutes, and re-accesses a core network in the higher-standard network. If the lower-standard network to which the UE falls back is the 2G network or the 3G network, the higher-standard network returned by the UE is, for example, the 4G network. If the lower-standard network to which the UE falls back is the 4G network, the higher-standard network returned by the UE is, for example, the 5G network.

In this embodiment of this application, because the first reject cause value is used, a probability that the UE falls back to the lower-standard network due to flow control, network congestion, or the like can be reduced, and the UE camps on a current network as much as possible, thereby reducing service restoration time.

When a switchover is performed because a site is faulty, UE at the faulty site accesses a network at another site. After a large amount of mobility signaling (for example, service request/attach request/registration request), the UE may send a large amount of session activation information (for example, information used to request to establish a session) to the network. This imposes impact on a session management network element (for example, SGW or SMF), and causes the session management network element to start flow control and reject a session activation request that exceeds a processing capability of the session management network element.

For example, UE in the network accesses the network only after data domain access and voice domain access are completed in the network. UE in the 4G network has two voice manners: circuit switched fallback (circuit switched fallback, CSFB) and an IMS. UE in the 5G network has one voice manner: the IMS, where the IMS voice manner requires the UE to activate an IMS voice session. After different session activation request information is rejected, the 4G UE and the 5G UE perform different behavior. Refer to Table 4.

**Table 4**

| Network type | Process in which a terminal accesses a network | UE behavior |
|---|---|---|
| 4G network | Two processes: | The IMS voice public data network (public data network, PDN) connection is unsuccessfully established: The UE still camps on the 4G network; and performs a voice service in a CSFB manner; and |
| | 1. Attachment with establishment of a data PDN connection | |
| | 2. Establishment of an IMS voice PDN connection | the data PDN connection is unsuccessfully established, the attachment of the UE is unsuccessful, and the UE makes a re-attempt four times, and falls back to the 2G network or the 3G network. |
| 5G network | Three processes: | The IMS voice protocol data unit (protocol data unit, PDU) session is unsuccessfully established: The UE re-initiates attachment to the 4G network; and |
| | 1. Registration | |
| | 2. Establishment of a data PDU session | |
| | | the data PDU session is unsuccessfully established, and the UE repeatedly performs activation in the 5G network and does not fall back to the 4G network. |
| | 3. Establishment of an IMS voice PDU session | |

In the 4G network, the UE may initiate the attach request, and may request to establish (or activate) the data PDN connection during the attachment. If the data PDN connection initiated by the UE is unsuccessfully established (or activated), the attachment of the UE is unsuccessful, and the UE re-attempts to perform attachment four times. If all the four attempts are unsuccessful, the UE falls back to the lower-standard network (for example, the 2G network or the 3G network) and re-initiates the attachment. In this case, a previous processing process of the attach request causes a network delay. In addition, the UE cannot return to the 4G network for a long time, and service response time of the UE is prolonged. In the 5G network, the UE may request the core network to establish the IMS voice PDU session. If the UE unsuccessfully establishes the IMS voice PDU session, the UE falls back to the 4G network and re-initiates the attachment. As a result, a previous processing process of the registration request is wasted. In addition, the UE cannot return to the 5G network for a long time, and service response time of the UE is prolonged.

In view of this, an embodiment of this application provides a communication method. In the method, UE may perform differentiated flow control on information corresponding to different types of sessions, to reduce a probability that the UE falls back to a lower-standard network. Refer to FIG. 8. If an embodiment shown in FIG. 8 is applied to a 4G system, a mobility management network element is an MME, and a session management network element is an SGW, or a session management network element is a serving gateway for control plane (serving gateway for control plane, SGW-C) in a scenario of control and user plane separation (CUPS) of an SGW. Alternatively, if an embodiment shown in FIG. 8 is applied to a 5G system, a mobility management network element is an AMF, and a session management network element is an SMF. The method shown in FIG. 8 may include the following steps.

S801: UE sends first request information to a session management network element. For example, the first request information of the UE may be transferred to the session management network element through an access network element and a mobility management network element.

The first request information may be used to request to establish a session.

For example, if this embodiment of this application is applied to a 4G system, the first request information is, for example, used to request to establish a data PDN connection or establish a voice PDN connection. Alternatively, if this embodiment of this application is applied to a 5G system, the first request information is, for example, used to request to establish a data PDU session or establish a voice PDU session.

S802: If the session that the first request information is used to request to establish is a first type of session, the session management network element processes the first request information according to a flow control policy corresponding to the first type of session.

In a possible alternative manner of this step, the session management network element may process the first request information according to a flow control policy corresponding to request information used to request to establish the first type of session.

The first type is, for example, a data type or a voice type. For example, if this embodiment of this application is applied to the 4G system, the first request information is, for example, used to request to establish the voice PDN connection, in other words, the first type is the voice type. In the 4G system, if the UE unsuccessfully establishes the voice PDN connection, the UE continues to perform a voice service in the 4G network in a CSFB manner, and does not fall back to a lower-standard network. Therefore, the session management network element may perform flow control on request information (for example, the first request information) used to request to establish the voice PDN connection. Even if the first request information is rejected due to the flow control, the UE does not fall back to the lower-standard network, so that service restoration time of the UE can still be ensured to some extent.

The session management network element processes the first request information according to the flow control policy corresponding to the first type of session. For example, in a manner, a seventh threshold is set in the session management network element, and if an amount of information that is received by the session management network element and that is used to request to establish the first type of session is less than the seventh threshold, the session management network element continues to process the first request information; or if an amount of information that is received by the SGW and that is used to request to establish the first type of session is greater than or equal to the seventh threshold, the session management network element may send reject information to the UE.

Optionally, the foregoing processing manner of the session management network element may be only for a single UE. For example, the flow control may be performed on a first type of request information sent by a UE. In this way, differentiated control can be implemented on the single UE. Alternatively, the foregoing processing manner of the session management network element may be for a plurality of UEs. For example, the session management network element does not focus on which UE that information is from, and the session management network element performs flow control provided that the information is a first type of request information (or information used to request to establish the voice PDN connection in the 4G network, or information used to request to establish the data PDU session in a 5G network). In this way, more UEs can be prevented from falling back to the lower-standard network to a large extent, and service restoration time of a large quantity of UEs can be ensured.

It can be learned from the embodiment shown in FIG. 2 that the mobility management network element may alternatively perform flow control on the information used to request to establish the first type of session. In other words, different network elements may perform flow control on the information used to request to establish the first type of session. For example, the mobility management network element and/or the session management network element may perform flow control on the information used to request to establish the first type of session. Flow control policies (for example, thresholds) used by the mobility management network element and the session management network element to perform flow control may be the same or different. Therefore, impact of signaling on a back-end network element may be further alleviated, and network reliability may be improved.

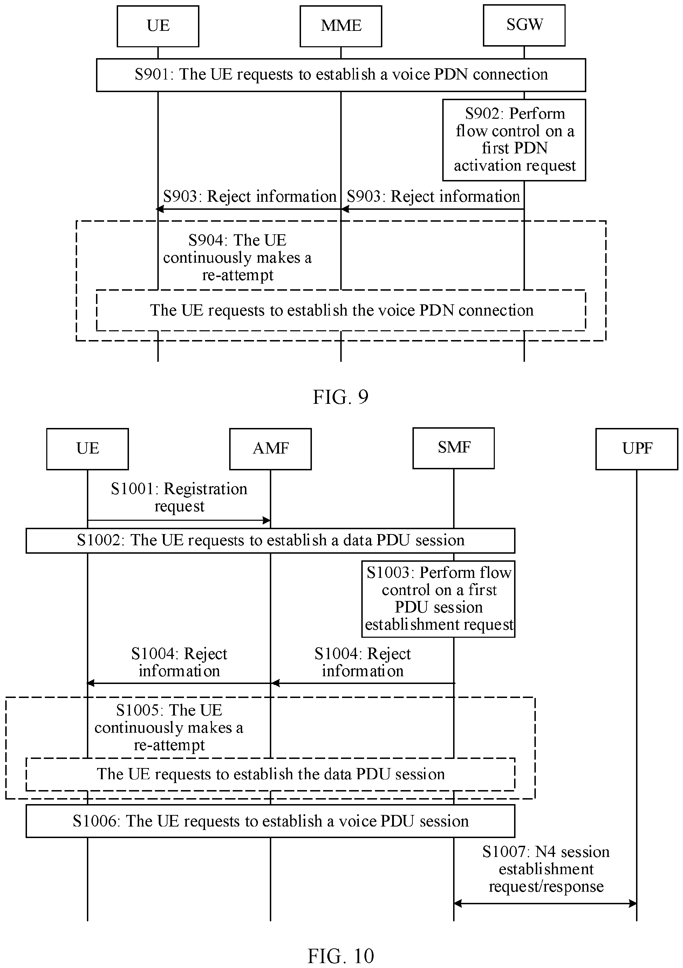

The following separately uses a 4G system and a 5G system as examples to describe the solutions provided in the embodiment shown in FIG. 8. First, a case in which the solutions of the embodiment shown in FIG. 8 are applied to the 4G system is described. FIG. 9 is a flowchart of this case. In an embodiment shown in FIG. 9, an example in which a session management network element is an SGW and a mobility management network element is an MME is used. The method may include the following steps.

S901: UE requests to establish a voice PDN connection.

In S901, the UE may send a first PDN activation request to the MME.

For example, the first PDN activation request of the UE may reach the MME through an eNB. The first PDN activation request is, for example, a PDN connectivity request (PDN connectivity request), and the first PDN activation request may be used to request to establish the voice PDN connection.

In S901, after receiving the first PDN activation request, the MME may further send a session establishment request to the SGW.

S902: The SGW performs flow control on the first PDN activation request.

For example, the SGW may obtain an access point name (access point name, APN) from the session establishment request from the MME, and may determine, based on the APN, that the first PDN activation request is used to request to establish the voice PDN connection. The first PDN activation request may be considered as first request information used to request to establish a first type of session in an embodiment shown in FIG. 10.

For a manner in which the SGW performs flow control on the first PDN activation request, refer to the descriptions of the embodiment shown in FIG. 8.

S903: The SGW sends reject information to the UE.

S903 is described using an example in which a flow control result is that the SGW sends the reject information to the UE. For example, the reject information sent by the SGW to the MME is third reject information, and the third reject information is, for example, a session establishment response. The session establishment response may carry a reject cause value A, for example, the reject cause value A is #68, and may indicate that a service is not supported (service not supported). Then, the MME may send fourth reject information to the UE, and the fourth reject information is, for example, PDN connectivity reject (PDN connectivity reject). The PDN connectivity reject may carry a reject cause value B, and the reject cause value B is, for example, #32, and may indicate that a service option is not supported (service option not supported)

If the flow control result in S902 is that the SGW continues to process the first PDN activation request, the SGW may send a create session response (create session response) to the MME, and correspondingly, the MME sends information such as PDN connectivity accept (PDN connectivity accept) to the UE.

S904: The UE continuously makes a re-attempt.

For example, the UE continues to request to establish the voice PDN connection in the current network, and does not fall back to a lower-standard network. In other words, it is equivalent to repeatedly performing S901.

In a 4G system, if the UE unsuccessfully establishes the voice PDN connection, the UE continues to perform a voice service in a 4G network in a CSFB manner, and does not fall back to the lower-standard network. Therefore, in this embodiment of this application, the session management network element may perform flow control on request information (for example, the first PDN activation request) used to request to establish the voice PDN connection. Even if processing of the first PDN activation request is rejected due to the flow control, the UE does not fall back to the lower-standard network, so that service restoration time of the UE can still be ensured to some extent. However, in the 4G system, if the UE unsuccessfully establishes a data PDN connection, the UE may re-attempt to establish the data PDN connection four times. If the UE still unsuccessfully establishes the data PDN connection, the UE falls back to the lower-standard network (for example, a 2G network or a 3G network). Therefore, for information used to request to establish the data PDN connection, the session management network element may reduce a probability of flow control. For example, the session management network element may continue to process the information used to request to establish the data PDN connection, to reduce a probability that processing of the information is rejected, thereby reducing a probability that the UE falls back to the lower-standard network.

FIG. 10 is a method for applying the solutions in the embodiment shown in FIG. 8 to a 5G system. In the method, an example in which a session management network element is an SMF, and a mobility management network element is an AMF is used for description. The method may include the following steps.

S1001: UE sends a registration request to the AMF.

Correspondingly, the AMF receives the registration request. For example, the UE sends the registration request to the AMF through a gNB.

S1002: The UE requests to establish a data PDU session.

In S1002, the UE may send a first PDU session establishment request to the AMF. For example, the first PDU session establishment request of the UE may reach the AMF through the gNB. The first PDU session establishment request is, for example, a PDU session establishment request, and the first PDU session establishment request may be used to request to establish the data PDU session.

In S1002, after receiving the first PDU session establishment request, the AMF may further send a session management context request to the SMF, and the session management context request is, for example, an Nsmf_PDUSession_CreateSMContext request (Nsmf_PDUSession_CreateSMContext request). For example, the session management context request is referred to as a first session management context request.

S1003: The SMF performs flow control on the first PDU session establishment request.

The first PDU session establishment request is used to request to establish the data PDU session, and the first PDU session establishment request may be considered as the first request information, in the embodiment shown in FIG. 10, used to request to establish the first type of session. It can be learned from the embodiment shown in FIG. 10 that the SMF may perform flow control on information used to request to establish the data PDU session. In this way, the UE does not fall back to the lower-standard network, and an amount of information processed by the SMF can also be effectively controlled. For a manner in which the SMF performs flow control on the first PDU session establishment request, refer to the descriptions of the embodiment shown in FIG. 8. The seventh threshold in the embodiment shown in FIG. 9 may be equal to or not equal to the seventh threshold in the embodiment shown in FIG. 10.

S1004: The SMF sends reject information to the UE.

In this step, an example in which a flow control result is that the SMF sends the reject information to the UE is used. For example, the reject information sent by the SMF to the AMF is fifth reject information, and the fifth reject information is, for example, an SMF service PDU session management context establishment response (Nsmf_PDUSession_CreateSMContext response). Optionally, the SMF service PDU session management context establishment response may carry a reject cause value C. The SMF rejects the UE due to the flow control, which indicates that the SMF needs to process a large amount of information, and cannot process the first PDU session establishment request. Therefore, the reject cause value C is, for example, #26, where #26 may indicate insufficient resources (insufficient resources). The resources herein are, for example, processing resources of the SMF.

After receiving the fifth reject information, the AMF may send sixth reject information to the UE, and the sixth reject information is, for example, PDU session establishment reject (PDU session establishment reject). If the fifth reject information carries the reject cause value C, optionally, the PDU session establishment reject may also carry the reject cause value C.

If a flow control result in S1003 is that the SMF continues to process the first PDU session establishment request, the SMF may send information such as a PDU session establishment response (PDU session establishment response) to the UE.

S1005: The UE continuously makes a re-attempt.

For example, the UE continues to request to establish the data PDU session in a current network. This is equivalent to returning to S1002 to start repeated execution.

A purpose of this step is to prevent the UE from falling back to the lower-standard network.

S1006: The UE requests to establish a voice PDU session.

In S1006, the UE may send a second PDU session establishment request to the AMF.

For example, the UE may send the second PDU session establishment request to the AMF through the gNB. The second PDU session establishment request is, for example, the PDU session establishment request, and the second PDU session establishment request may be used to request to establish the voice PDU session. For example, the UE may perform S1206 after the data PDU session is successfully established, or the UE may perform S1206 even if the data PDU session is unsuccessfully established.

In S1006, after receiving the second PDU session establishment request, the AMF may further send a session management context request to the SMF, and the session management context request is, for example, the Nsmf_PDUSession_CreateSMContext response. For example, the session management context request in S1006 is referred to as a second session management context request.

S1007: The SMF sends an N4 session establishment request to a UPF. Correspondingly, the UPF sends an N4 session establishment response to the SMF.

The second PDU session establishment request is used to request to establish the voice PDU session. It can be learned from the embodiment shown in FIG. 8 that the SMF may continue to process information used to request to establish the voice PDU session, to prevent the UE from falling back to the lower-standard network. For example, the SMF may send the N4 session establishment request to the UPF, to request to establish an N4 session. The N4 session establishment request is, for example, the N4 session establishment request (N4 session establishment request). After receiving the N4 session establishment request, the UPF may send the N4 session establishment response to the SMF. The N4 session establishment response is, for example, the N4 session establishment response (N4 session establishment response). After receiving the N4 session establishment response, the SMF may send the SMF service PDU session management context establishment response to the AMF. Correspondingly, the AMF sends PDU session establishment accept/reject (PDU session establishment accept/reject) to the UE, to indicate that the voice PDU session is successfully established or unsuccessfully established. Interaction between the SMF and the AMF is not shown in FIG. 10.

In the 5G system, if the UE unsuccessfully establishes the data PDU session, the UE continues to camp on a 5G network for repeated attempts, and does not fall back to the lower-standard network (for example, a 4G network). Therefore, in this embodiment of this application, the session management network element may perform flow control on request information (for example, the first PDU session establishment request) used to request to establish the data PDU session. Even if processing of the first PDU session establishment request is rejected due to the flow control, the UE does not fall back to the lower-standard network, so that service restoration time of the UE can still be ensured to some extent. However, in the 5G system, if the UE unsuccessfully establishes the voice PDU session, the UE falls back to the 4G network. Therefore, for the information used to request to establish the voice PDU session, the session management network element may reduce a probability of flow control. For example, the session management network element may continue to process the information used to request to establish the voice PDU session, to reduce a probability that processing of the information is rejected, thereby reducing a probability that the UE falls back to the lower-standard network.

In conclusion, in embodiments of this application, different response manners of the UE for different types of information are considered. Differentiated flow control is performed on the different types of information, so that the probability that the UE falls back to the lower-standard network is reduced, and service restoration efficiency of the UE is improved.

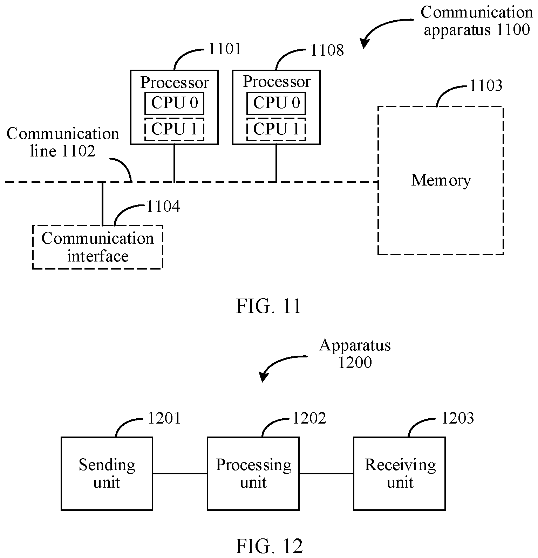

FIG. 11 is a schematic diagram of a structure of a communication apparatus according to an embodiment of this application. The communication apparatus 1100 may be the mobility management network element (for example, the mobility management network element 2) in any one of the embodiment shown in FIG. 2, and the embodiment shown in FIG. 4 to the embodiment shown in FIG. 10 or a circuit system of the mobility management network element, and is configured to implement the method corresponding to the mobility management network element in the foregoing method embodiments. Alternatively, the communication apparatus 1100 may be the session management network element in the embodiment shown in FIG. 8 to the embodiment shown in FIG. 10 or a circuit system of the session management network element, and is configured to implement the method corresponding to the session management network element in the foregoing method embodiments. For a specific function, refer to the descriptions in the foregoing method embodiments. For example, a circuit system is a chip system.

The communication apparatus 1100 includes at least one processor 1101. The processor 1101 may be configured to perform internal processing of the apparatus, to implement a specific control processing function. Optionally, the processor 1101 includes instructions. Optionally, the processor 1101 may store data. Optionally, different processors may be independent components, may be located at different physical locations, or may be located on different integrated circuits. Optionally, different processors may be integrated into one or more processors, for example, integrated into one or more integrated circuits.

Optionally, the communication apparatus 1100 includes one or more memories 1103, configured to store instructions. Optionally, the memory 1103 may further store data. The processor and the memory may be separately disposed, or may be integrated together.

Optionally, the communication apparatus 1100 includes a communication line 1102 and at least one communication interface 1104. Because the memory 1103, the communication line 1102, and the communication interface 1104 are all optional, the memory 1103, the communication line 1102, and the communication interface 1104 are all represented by dashed lines in FIG. 11.

Optionally, the communication apparatus 1100 may further include a transceiver and/or an antenna. The transceiver may be configured to send information to another apparatus or receive information from another apparatus. The transceiver may be referred to as a transceiver machine, a transceiver circuit, an input/output interface, or the like, and is configured to implement a transceiver function of the communication apparatus 1100 by using the antenna. Optionally, the transceiver includes a transmitter (transmitter) and a receiver (receiver). For example, the transmitter may be configured to generate a radio frequency (radio frequency) signal based on a baseband signal, and the receiver may be configured to convert the radio frequency signal into the baseband signal.

The processor 1101 may include a general-purpose central processing unit (central processing unit, CPU), a microprocessor, an application-specific integrated circuit (application-specific integrated circuit, ASIC), or one or more integrated circuits configured to control program execution of the solutions of this application.

The communication line 1102 may include a path for transferring information between the foregoing components.

The communication interface 1104 is configured to communicate, through any apparatus like the transceiver, with another device or a communication network, for example, an Ethernet network, a radio access network (radio access network, RAN), a wireless local area network (wireless local area network, WLAN), or a wired access network.

The memory 1103 may be a read-only memory (read-only memory, ROM), another type of static storage device that can store static information and instructions, a random access memory (random access memory, RAM), another type of dynamic storage device that can store information and instructions, an electrically erasable programmable read-only memory (electrically erasable programmable read-only memory, EEPROM), a compact disc read-only memory (compact disc read-only memory, CD-ROM), another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer. However, the memory 1103 is not limited thereto. The memory 1103 may exist independently, and is connected to the processor 1101 through the communication line 1102. Alternatively, the memory 1103 may be integrated with the processor 1101.

The memory 1103 is configured to store computer-executable instructions for performing the solutions of this application, and execution of the computer-executable instructions is controlled by the processor 1101. The processor 1101 is configured to execute the computer-executable instructions stored in the memory 1103, to implement the communication method provided in the foregoing embodiments of this application.

Optionally, the computer-executable instructions in this embodiment of this application may also be referred to as application program code. This is not specifically limited in embodiments of this application.

During specific implementation, in an embodiment, the processor 1101 may include one or more CPUs such as a CPU 0 and a CPU 1 in FIG. 11.

During specific implementation, in an embodiment, the communication apparatus 1100 may include a plurality of processors, for example, the processor 1101 and a processor 1108 in FIG. 11. Each of the processors may be a single-core (single-CPU) processor, or may be a multicore (multi-CPU) processor. The processor herein may be one or more devices, circuits, and/or processing cores configured to process data (for example, computer program instructions).

When the apparatus shown in FIG. 11 is a chip, for example, a chip of a mobility management network element or a chip of a session management network element, the chip includes the processor 1101 (which may further include the processor 1108), the communication line 1102, the memory 1103, and the communication interface 1104. Specifically, the communication interface 1104 may be an input interface, a pin, a circuit, or the like. The memory 1103 may be a register, a cache, or the like. The processor 1101 and the processor 1108 each may be a general-purpose CPU, a microprocessor, an ASIC, or one or more integrated circuits configured to control program execution of the communication method in any one of the foregoing embodiments.

In embodiments of this application, the apparatus may be divided into functional modules based on the foregoing method examples. For example, each functional module may be obtained through division based on each corresponding function, or two or more functions may be integrated into one processing module. The foregoing integrated module may be implemented in a form of hardware, or may be implemented in a form of a software functional module. It should be noted that in embodiments of this application, module division is an example, and is merely a logical function division. In actual implementation, another division manner may be used. For example, when each functional module is obtained through division based on each corresponding function, FIG. 12 is a schematic diagram of an apparatus. The apparatus 1200 may be the mobility management network element or the session management network element in the foregoing method embodiments, or a chip in the mobility management network element or a chip in the session management network element. The apparatus 1200 includes a sending unit 1201, a processing unit 1202, and a receiving unit 1203.

It should be understood that the apparatus 1200 may be configured to implement the steps performed by the mobility management network element or the session management network element in the method in embodiments of this application. For related features, refer to the foregoing embodiments. Details are not described herein again.

Optionally, functions/implementation processes of the sending unit 1201, the receiving unit 1203, and the processing unit 1202 in FIG. 12 may be implemented by the processor 1101 in FIG. 11 by invoking the computer-executable instructions stored in the memory 1103. Alternatively, a function/implementation process of the processing unit 1202 in FIG. 12 may be implemented by the processor 1101 in FIG. 11 by invoking the computer-executable instructions stored in the memory 1103, and functions/implementation processes of the sending unit 1201 and the receiving unit 1203 in FIG. 12 may be implemented through the communication interface 1104 in FIG. 11.

Optionally, when the apparatus 1200 is a chip or a circuit, the functions/implementation processes of the sending unit 1201 and the receiving unit 1203 may be further implemented by using a pin, the circuit, or the like.

This application further provides a computer-readable storage medium. The computer-readable storage medium stores a computer program or instructions. When the computer program or the instructions are run, the method performed by the session management network element or the mobility management network element in the foregoing method embodiments is implemented. In this way, the functions in the foregoing embodiments may be implemented in a form of a software functional unit and sold or used as an independent product. Based on such an understanding, the technical solutions of this application essentially, or the part making contributions, or some of the technical solutions may be implemented in a form of a software product. The computer software product is stored in a storage medium and includes several instructions for instructing a computer device (which may be a personal computer, a server, a network device, or the like) to perform all or some of steps of the methods described in embodiments of this application. The storage medium includes any medium that can store program code, such as a USB flash drive, a removable hard disk drive, a ROM, a RAM, a magnetic disk, or an optical disc.

This application further provides a computer program product. The computer program product includes computer program code. When the computer program code is run on a computer, the computer is enabled to perform the method performed by the session management network element or the mobility management network element in any one of the foregoing method embodiments.

An embodiment of this application further provides a processing apparatus, including a processor and an interface. The processor is configured to perform the method performed by the mobility management network element or the session management network element in any one of the foregoing method embodiments.

All or some of the foregoing embodiments may be implemented by using software, hardware, firmware, or any combination thereof. When the software is used to implement the embodiments, all or some of the embodiments may be implemented in a form of a computer program product. The computer program product includes one or more computer instructions. When the computer program instructions are loaded and executed on a computer, procedures or functions according to embodiments of this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state drive, SSD)), or the like.

Various illustrative logical units and circuits described in embodiments of this application may implement or operate the described functions by using a general-purpose processor, a digital signal processor (digital signal processor, DSP), an application-specific integrated circuit (application-specific integrated circuit, ASIC), a field programmable gate array (field-programmable gate array, FPGA), or another programmable logic apparatus, a discrete gate or transistor logic, a discrete hardware component, or a design of any combination of the foregoing. The general-purpose processor may be a microprocessor. Optionally, the general-purpose processor may alternatively be any conventional processor, controller, microcontroller, or state machine. The processor may alternatively be implemented by a combination of computing apparatuses, such as a digital signal processor and a microprocessor, a plurality of microprocessors, one or more microprocessors with a digital signal processor core, or any other similar configuration.

Steps of the methods or algorithms described in embodiments of this application may be directly embedded into hardware, a software unit executed by the processor, or a combination thereof. The software unit may be stored in a RAM, a flash memory, a ROM, an erasable programmable read-only memory (erasable programmable read-only memory, EPROM), an EEPROM, a register, a hard disk drive, a removable magnetic disk, a CD-ROM, or a storage medium in any other form in the art. For example, the storage medium may be connected to the processor, so that the processor may read information from the storage medium and write information to the storage medium. Alternatively, the storage medium may be integrated into the processor. The processor and the storage medium may be disposed in an ASIC, and the ASIC may be disposed in a terminal device. Optionally, the processor and the storage medium may alternatively be disposed in different components in the terminal device.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more procedures in the flowcharts and/or in one or more blocks in the block diagrams.

Although embodiments of this application are described with reference to specific features and embodiments thereof, it is clear that various modifications and combinations may be made to embodiments of this application without departing from the scope of embodiments of this application. Correspondingly, embodiments and the accompanying drawings of this application are merely example descriptions of embodiments of this application defined by the appended claims, and are considered as any or all modifications, variations, combinations, or equivalents that cover the scope of embodiments of this application. It is clear that a person skilled in the art may make various modifications and variations to embodiments of this application without departing from the scope of embodiments of this application. In this way, embodiments of this application are also intended to cover these modifications and variations provided that these modifications and variations of embodiments of this application fall within the scope of the claims of embodiments of this application and equivalent technologies thereof.

## Claims

1. A communication method, applied to a mobility management network element, wherein the method comprises:
receiving first request information from a terminal device, wherein the first request information is used to request a first service, or is attach request information or registration request information of the terminal device; and
when the first request information belongs to a first type of information, and an original receiving network element of the first type of information is a faulty mobility management network element,
processing the first request information according to a flow control policy for the first type of information.

2. The method according to claim 1, comprising:
when an original receiving network element indicated by first information comprised in the first request information is different from the mobility management network element, determining that the first request information belongs to the first type of information.

3. The method according to claim 2, wherein if the first request information is used to request the first service, the first information comprises mobility management entity code MMEC, or access and mobility management function AMF set identifier ID information and an AMF pointer.

4. The method according to claim 3, wherein if the first request information is used to request the first service, the processing the first request information according to a flow control policy for the first type of information comprises:
sending first reject information to the terminal device if an amount of information belonging to the first type of information is less than a first threshold, to reject a service requested by using the first request information; or
ignoring the first request information if an amount of information belonging to the first type of information is greater than or equal to a first threshold.

5. The method according to claim 2, wherein if the first request information is the attach request information or the registration request information of the terminal device, the first information comprises a globally unique mobility management entity identifier GUMMEI or a globally unique access and mobility management function identifier GUAMI.

6. The method according to claim 5, wherein if the first request information is the attach request information or the registration request information of the terminal device, the processing the first request information according to a flow control policy for the first type of information comprises:
sending first response information to the terminal device if an amount of information belonging to the first type of information is less than a second threshold, wherein the first response information is first accept information, and the first accept information indicates that the attach request information is accepted or that the registration request information is accepted, or the first response information indicates that processing of the first request information is rejected; or
ignoring the first request information if an amount of information belonging to the first type of information is greater than or equal to a second threshold.

7. The method according to claim 6, wherein the sending first response information to the terminal device if an amount of information belonging to the first type of information is less than a second threshold comprises:
sending the first response information to the terminal device if the amount of information belonging to the first type of information is less than the second threshold and a first event is met, wherein the first response information indicates that processing of the first request information is rejected.

8. The method according to claim 7, wherein the first event comprises:
no response is received after second request information is sent to a user management network element, wherein the second request information is used to request to obtain subscription data of the terminal device or update location information of the terminal device.

9. The method according to claim 7, wherein the first event comprises:
after a plurality of pieces of third request information are sent to a user management network element, a proportion of third request information for which no response is received to the plurality of pieces of third request information is greater than or equal to a third threshold, wherein the third request information is used to request to obtain subscription data of the terminal device or update location information of the terminal device.

10. The method according to claim 7, wherein the first event comprises:
a plurality of pieces of fourth request information are sent to a user management network element; and
a proportion of fourth request information whose response is a reject response to the plurality of pieces of fourth request information is greater than or equal to a fourth threshold, wherein the fourth request information is used to request to obtain subscription data of the terminal device or update location information of the terminal device.

11. The method according to claim 7, wherein the first event comprises:
an amount of information that is sent to a user management network element and that is used to obtain subscription data is greater than or equal to a fifth threshold.

12. The method according to any one of claims 6 to 11, wherein if the first response information indicates that processing of the first request information is rejected, the first response information comprises a first reject cause value, wherein the first reject cause value indicates the terminal device to continue to attempt to connect.

13. The method according to any one of claims 6 to 12, wherein
the method further comprises: obtaining the subscription data of the terminal device from the user management network element if the amount of information belonging to the first type of information is less than the second threshold; and
the sending first response information to the terminal device, wherein the first response information is first accept information, and the first accept information indicates that the attach request information is accepted or that the registration request information is accepted comprises: sending the first response information to the terminal device after the subscription data of the terminal device is obtained, wherein the first response information is the first accept information, and the first accept information indicates that the attach request information is accepted or that the registration request information is accepted, wherein
the second threshold is related to performance of the user management network element.

14. The method according to any one of claims 8 to 13, wherein the user management network element is a home subscriber server HSS or a unified data management UDM network element.

15. A communication apparatus, comprising:
a transceiver unit, configured to receive first request information from a terminal device, wherein the first request information is used to request a first service, or is attach request information or registration request information of the terminal device; and
a processing unit, configured to process the first request information according to a flow control policy for a first type of information when the first request information belongs to the first type of information, wherein an original receiving network element of the first type of information is a faulty mobility management network element.

16. The communication apparatus according to claim 15, wherein the processing unit is further configured to:
when an original receiving network element indicated by first information comprised in the first request information is different from the communication apparatus, determine that the first request information belongs to the first type of information.

17. The communication apparatus according to claim 15 or 16, wherein if the first request information is used to request the first service, the processing unit is configured to process the first request information according to the flow control policy for the first type of information in the following manner:
sending first reject information to the terminal device through the transceiver unit if an amount of information belonging to the first type of information is less than a first threshold, to reject a service requested by using the first request information; or
ignoring the first request information if an amount of information belonging to the first type of information is greater than or equal to a first threshold.

18. The communication apparatus according to claim 15 or 16, wherein if the first request information is the attach request information or the registration request information of the terminal device, the processing unit is configured to process the first request information according to the flow control policy for the first type of information in the following manner:
sending first response information to the terminal device through the transceiver unit if an amount of information belonging to the first type of information is less than a second threshold, wherein the first response information is first accept information, and the first accept information indicates that the attach request information is accepted or that the registration request information is accepted, or the first response information indicates that processing of the first request information is rejected; or
ignoring the first request information if an amount of information belonging to the first type of information is greater than or equal to a second threshold.

19. The communication apparatus according to claim 18, wherein the processing unit is configured to send the first response information to the terminal device through the transceiver unit in the following manner if the amount of information belonging to the first type of information is less than the second threshold:
sending the first response information to the terminal device through the transceiver unit if the amount of information belonging to the first type of information is less than the second threshold and a first event is met, wherein the first response information indicates that processing of the first request information is rejected.

20. The communication apparatus according to claim 18 or 19, wherein
the processing unit is further configured to obtain subscription data of the terminal device from a user management network element if the amount of information belonging to the first type of information is less than the second threshold; and
the processing unit is configured to send the first response information to the terminal device through the transceiver unit in the following manner, wherein the first response information is the first accept information, and the first accept information indicates that the attach request information is accepted or that the registration request information is accepted: sending the first response information to the terminal device through the transceiver unit after the subscription data of the terminal device is obtained, wherein the first response information is the first accept information, and the first accept information indicates that the attach request information is accepted or that the registration request information is accepted, wherein
the second threshold is related to performance of the user management network element.

21. A communication apparatus, comprising a processor and a memory, wherein the memory is coupled to the processor, and the processor is configured to perform the method according to any one of claims 1 to 14.

22. A computer-readable storage medium, wherein the computer-readable storage medium is configured to store a computer program, and when the computer program is run on a computer, the computer is enabled to perform the method according to any one of claims 1 to 14.

23. A chip system, wherein the chip system comprises:
a processor and an interface, wherein the processor is configured to invoke instructions from the interface and run the instructions, and when the processor executes the instructions, the method according to any one of claims 1 to 14 is implemented.

24. A computer program product, wherein the computer program product comprises a computer program, and when the computer program is run on a computer, the computer is enabled to perform the method according to any one of claims 1 to 14.

25. A system, wherein the system comprises a user management network element and a mobility management network element, and the mobility management network element is configured to perform the method according to any one of claims 1 to 14.

26. The system according to claim 25, wherein the user management network element is a home subscriber server HSS or a unified data management UDM network element.
